# EUROPEAN PATENT APPLICATION

(11) **EP 4 752 715 A1**
(43) Date of publication of application: **03.06.2026**
(21) Application number: 24890172.0
(22) Date of filing: 23.07.2024
(51) Int. Cl.: G06F 9/451

(54) **NOTIFICATION DISPLAY METHOD, ELECTRONIC DEVICE, CHIP SYSTEM AND READABLE STORAGE MEDIUM**

(30) Priority: 15.11.2023 CN 202311526812; 10.01.2024 CN 202410040048
(71) Applicant: Honor Device Co., Ltd., Shenzhen, Guangdong 518040 (CN)
(72) Inventor: ZHANG, Taolin, Shenzhen, Guangdong 518040 (CN); HUANG, Liwei, Shenzhen, Guangdong 518040 (CN); ZHOU, Shuang, Shenzhen, Guangdong 518040 (CN)
(74) Representative: Isarpatent
(86) International application number: PCT/CN2024/106898
(87) International publication number: WO 2025/102806

(57) **Abstract**

This application discloses a notification display method, an electronic device, a chip system, and a readable storage medium, and pertains to the field of terminal technologies. The method includes: The electronic device is in a first state. When the electronic device meets a state switching condition, the electronic device switches from the first state to a second state, and displays a first interface in the second state. The electronic device is in a low power mode and performs landscape display in the second state. The electronic device displays a first notification in the first interface after obtaining the first notification. A second interface in the second state is displayed when the electronic device does not receive a user input operation in first duration. The electronic device displays a second notification in the second interface after obtaining the second notification. The electronic device displays a third interface in the second state in response to a first slide operation triggered in the second interface. The third interface includes the first notification and a first notification icon. In this application, fast switching between notifications can be implemented for display.

## Description

This application claims priority to Chinese Patent Application No. 202311526812.5, filed with the China National Intellectual Property Administration on November 15, 2023 and entitled "NOTIFICATION DISPLAY METHOD, ELECTRONIC DEVICE, AND READABLE STORAGE MEDIUM", and claims priority to Chinese Patent Application No. 202410040048.9, filed with the China National Intellectual Property Administration on January 10, 2024 and entitled "NOTIFICATION DISPLAY METHOD, ELECTRONIC DEVICE, CHIP SYSTEM, AND READABLE STORAGE MEDIUM", which are incorporated herein by reference in their entireties.

### TECHNICAL FIELD

This application relates to the field of terminal technologies, and in particular, to a notification display method, an electronic device, a chip system, and a readable storage medium.

### BACKGROUND

With rapid development of terminal technologies, electronic devices such as mobile phones and tablet computers gradually become an indispensable part of people's daily life. In a process in which a user uses the electronic device, when a new notification event exists in the electronic device, the electronic device needs to properly display a notification corresponding to the notification event.

### SUMMARY

This application provides a notification display method, an electronic device, a chip system, and a readable storage medium, to resolve a problem of properly displaying a notification. The technical solutions are as follows:
According to a first aspect, a notification display method is provided, applied to an electronic device. The method includes:
The electronic device is in a first state. The first state is a screen-on state or a screen-off state. When the electronic device meets a state switching condition, the electronic device switches from the first state to a second state, and displays a first interface in the second state. The electronic device is in a low power mode and performs landscape display in the second state, and the state switching condition includes that the electronic device is in a support state. The electronic device displays a first notification in the first interface after obtaining the first notification. A second interface in the second state is displayed when the electronic device does not receive a user input operation in first duration. The second interface includes a first notification icon of the first notification and does not include the first notification. The electronic device displays a second notification in the second interface after obtaining the second notification. The electronic device displays a third interface in the second state in response to a first slide operation triggered in the second interface. The third interface includes the first notification and the first notification icon.

In this way, after the first notification is obtained, the first notification is displayed in the first interface in the second state. When a user does not operate, the first notification is collapsed into the first notification icon. The second notification continues to be displayed after the second notification is received, and switches to the first notification in response to the first slide operation after the first slide operation of the user is received. In this way, the user can trigger, by using the slide operation, the electronic device to perform notification switching for display, thereby increasing a notification switching speed and ensuring properness of notification display.

In an example of this application, when the second notification is an in-progress notification, the third interface further includes a second notification icon of the second notification, the first notification icon and the second notification icon are expanded for display, the first notification icon is in a selected state, and the second notification icon is in an unselected state; and a notification event corresponding to the in-progress notification is a continuous event.

In this way, the second notification icon of the second notification is displayed in the third interface, so that the user can learn of a notification that may be switched for display, thereby improving user experience.

In an example of this application, after the electronic device displays the third interface in the second state in response to the first slide operation triggered in the second interface, the method further includes: In response to a user selection operation triggered on the second notification icon in the third interface, the electronic device switches the first notification in the third interface to the second notification, displays the first notification icon in an unselected state, and displays the second notification icon in a selected state.

In this way, the first notification icon and the second notification icon that are expanded are displayed to the user, so that the user can trigger a notification icon to perform notification switching. If more notifications exist, the user may quickly trigger the electronic device to switch to a notification that the user wants to display, thereby increasing a notification switching speed and improving user experience.

In an example of this application, after the electronic device displays the third interface in the second state in response to the first slide operation triggered in the second interface, the method further includes: the electronic device displays a fourth interface in the second state when a collapsed display condition of the second notification is met, where the fourth interface includes the first notification icon and the second notification icon, and does not include the first notification or the second notification, and the first notification icon and the second notification icon are expanded for display.

In this way, when the collapsed display condition of the second notification is met, the second notification is no longer displayed, but the first notification icon and the second notification icon are still displayed, so that the user can view the corresponding notifications at any time by using the notification icons, and display space can be saved.

In an example of this application, after the electronic device displays the fourth interface in the second state when the collapsed display condition of the second notification is met, the method further includes: stacking the second notification icon on the first notification icon for display if no user trigger operation is received in second duration; and expanding the first notification icon and the second notification icon for display when a user trigger operation on the notification icons stacked for display is received.

In this way, the user can trigger a plurality of notification icons to be expanded for display, and the user can also trigger the plurality of notification icons to be stacked for display, so that the user can control a notification icon display manner according to a requirement, thereby improving user experience.

In an example of this application, after the expanding the first notification icon and the second notification icon for display when a user trigger operation on the notification icons stacked for display is received, the method further includes: The electronic device receives a trigger operation on either of the notification icons that are expanded for display; and in response to the trigger operation on the either of the notification icons, the electronic device displays a notification corresponding to the either of the notification icons in the second state, and displays the either of the notification icons is a selected state.

In this way, for any one of a plurality of notification icons expanded for display, when a user trigger operation on the any one of the notification icons is received, a notification corresponding to the any one of the notification icons is displayed, so that the user can view notification information, thereby improving user experience.

In an example of this application, after the stacking the second notification icon on the first notification icon for display if no user trigger operation is received in second duration, the method further includes: The electronic device displays a fifth interface in the second state after obtaining a third notification. The fifth interface includes the first notification icon, the second notification icon, the third notification, and a third notification icon of the third notification, the third notification is an in-progress notification, and the first notification icon, the second notification icon, and the third notification icon are expanded for display.

In this way, when the notification icons are stacked for display, and a new in-progress notification is received, the electronic device expands all the notification icons for display, so that the user can trigger, based on the notification icons expanded for display, the electronic device to display a notification corresponding to the notification icon, thereby implementing fast switching between notifications for display.

In an example of this application, when a quantity of notification icons in the second state exceeds a preset quantity, the preset quantity of notification icons are expanded for display, another notification icon different from the preset quantity of notification icons in the second state is stacked for display under the preset quantity of notification icons, and a push time of the notification icon stacked for display is earlier than a push time of the notification icon expanded for display.

In this way, a part is stacked for display, and the other part is expanded for display, so that occupation of the display space can be reduced, and the user can directly view a notification icon expanded for display, to learn of a notification that may be viewed.

In an example of this application, the electronic device receives a second slide operation on the notification icon in the second state. A sliding direction of the second slide operation is a direction in which the notification icon stacked for display points to the notification icon expanded for display, and a sliding distance of the second slide operation corresponds to a moving distance of one notification icon. In response to the second slide operation, the electronic device stacks, on a 1st notification icon for display, a 2nd notification icon in the notification icons expanded for display, and sequentially moves, in the sliding direction by one place, another notification icon different from the 1st notification icon and the 2nd notification icon in the notification icons expanded for display.

In this way, the user can trigger, by using the second slide operation, the electronic device to separately perform stacked display through stacking on two sides, so that the user can view different notification icons, to learn of an existing notification icon, thereby improving user experience.

In an example of this application, after the electronic device displays the second notification in the second interface after obtaining the second notification, the method further includes: The electronic device overlays a fourth notification on the second notification after obtaining the fourth notification; or the electronic device replaces the second notification in the second interface with a fourth notification after obtaining the fourth notification. In this way, when notifications are continuously obtained, the continuously obtained notifications may be displayed through overlaying, or may be displayed through replacement, thereby increasing notification display manners.

In an example of this application, the electronic device no longer displays the second notification or the second notification icon in the second state after execution of the notification event corresponding to the second notification ends. In this way, occupation of the display space by the notification and the notification icon can be reduced, or a case in which the notification event ends and therefore, there is no response when the user triggers a corresponding notification can be avoided.

In an example of this application, that the electronic device displays a second notification in the second interface after obtaining the second notification includes: After obtaining the second notification, the electronic device determines first application information of an application to which the second notification belongs; and the electronic device displays the second notification in full screen in the second interface when the first application information belongs to an in-progress notification whitelist. The in-progress notification whitelist includes application information of an application to which an in-progress notification belongs.

In this way, the in-progress notification whitelist is set to distinguish between an in-progress notification and a non-in-progress notification, so that a notification whose corresponding notification icon needs to be displayed when the collapsed display condition is met can be determined.

In an example of this application, the second notification is a non-in-progress notification, and a notification event corresponding to the non-in-progress notification is a non-continuous event. In this case, that the electronic device displays a second notification in the second interface after obtaining the second notification includes: The electronic device displays first notification information of the second notification in the second interface after obtaining the second notification. The first notification information is obtained by hiding notification text content of the second notification.

In this way, security of displaying the second notification can be improved by hiding the second notification for display, thereby improving security of user privacy.

In an example of this application, after the electronic device displays the second notification in the second interface after obtaining the second notification, the method further includes: The electronic device displays second notification information of the second notification when the electronic device receives a view operation on the first notification information, where the notification text content of the second notification is not hidden in the second notification information; or the electronic device displays the second interface if a display cancellation operation is received, or a user trigger operation on the second notification information in third duration is not received.

In this way, after the second notification, the user can trigger the electronic device to display the notification text content of the second notification, and the user can also trigger display of the second notification to be cancelled, thereby improving user experience.

In an example of this application, after the electronic device displays second notification information of the second notification when the electronic device receives a view operation on the first notification information, the method further includes: The electronic device receives a view operation on the second notification information; and in response to the view operation on the second notification information, the electronic device displays an application detail page of an application to which the second notification belongs.

In this way, the user can tap the second notification information, so that the electronic device enters the application detail page of the application through one tap. In this way, the user can quickly view detailed information of the second notification, thereby increasing a speed of viewing the detailed information by the user.

In an example of this application, the electronic device displays an unlock interface when the view operation on the first notification information is received, and a lock screen password is set for the electronic device. The unlock interface is used to indicate a user to unlock. That the electronic device displays second notification information of the second notification when the electronic device receives a view operation on the first notification information includes: The electronic device displays the second notification information of the second notification in response to the view operation on the first notification information when unlocking succeeds.

In this way, when the lock screen password is set, before the second notification information is displayed, the user is first indicated to unlock, and only when the user unlocks successfully, the second notification information is displayed, thereby improving security of displaying the second notification and protecting user privacy.

In an example of this application, that the electronic device displays a first notification in the first interface after obtaining the first notification includes: The electronic device adds a non-transparent layer to the first interface after obtaining the first notification; and the electronic device displays the first notification at the non-transparent layer.

In this way, the non-transparent layer is added, and the first notification is displayed at the non-transparent layer, so that the first notification is clearly displayed. In other words, recognition of the first notification is improved, so that the user can clearly see the first notification.

In an example of this application, when the electronic device includes only one display unit, the support state means that the electronic device is in a landscape mode and duration is greater than fourth duration; and when the electronic device includes two display units, the support state means that an included angle between the two display units is less than or equal to a first preset angle and is greater than or equal to a second preset angle, duration is greater than the fourth duration, and the first preset angle is greater than the second preset angle.

In this way, when the electronic device is in the support state, the electronic device can enter the second state, to perform landscape display in the second state, and in a case of landscape display, the user can quickly trigger the electronic device to perform notification switching.

According to a second aspect, an electronic device is provided. The electronic device includes one or more processors and a memory. The memory is coupled to the one or more processors, the memory is configured to store computer program code, the computer program code includes computer instructions, and the one or more processors invoke the computer instructions to enable the electronic device to perform the method according to the first aspect.

According to a third aspect, a chip system is provided. The chip system is applied to an electronic device, the chip system includes one or more processors, and the one or more processors are configured to invoke computer instructions to enable the electronic device to perform the method according to any example of the first aspect.

According to a fourth aspect, a computer-readable storage medium is provided. The computer-readable storage medium includes instructions, and when the instructions are run on an electronic device, the electronic device is enabled to perform the method according to any example of the first aspect.

According to a fifth aspect, a computer program product including instructions is provided. When the computer program product runs on a computer, the computer is enabled to perform the method according to the first aspect.

Technical effects achieved in the second aspect, the third aspect, the fourth aspect, and the fifth aspect are similar to the technical effects achieved by corresponding technical means in the first aspect. Details are not described herein again.

### BRIEF DESCRIPTION OF DRAWINGS

FIG. 1 is a schematic diagram of an application scenario according to an example embodiment;
FIG. 2 is a schematic diagram of a support state of an electronic device according to an example embodiment;
FIG. 3A to FIG. 3E are a schematic diagram of an application scenario according to another example embodiment;
FIG. 4A and FIG. 4B are a schematic diagram of an application scenario according to another example embodiment;
FIG. 5A to FIG. 5C are a schematic diagram of an application scenario according to another example embodiment;
FIG. 6A to FIG. 6C are a schematic diagram of an application scenario according to another example embodiment;
FIG. 7 is a schematic diagram of an application scenario according to another example embodiment;
FIG. 8A to FIG. 8D are a schematic diagram of an application scenario according to another example embodiment;
FIG. 9A to FIG. 9D are a schematic diagram of an application scenario according to another example embodiment;
FIG. 10A to FIG. 10C are a schematic diagram of an application scenario according to another example embodiment;
FIG. 11A to FIG. 11C are a schematic diagram of an application scenario according to another example embodiment;
FIG. 12 is a schematic diagram of an application scenario according to another example embodiment;
FIG. 13 is a schematic diagram of an application scenario according to another example embodiment;
FIG. 14 is a schematic diagram of an application scenario according to another example embodiment;
FIG. 15 is a schematic diagram of an application scenario according to another example embodiment;
FIG. 16 is a schematic diagram of an application scenario according to another example embodiment;
FIG. 17 is a schematic diagram of an application scenario according to another example embodiment;
FIG. 18 is a schematic diagram of an application scenario according to another example embodiment;
FIG. 19 is a schematic diagram of an application scenario according to another example embodiment;
FIG. 20 is a schematic flowchart of a notification display method according to an example embodiment; and
FIG. 21 is a schematic diagram of a structure of an electronic device according to an example embodiment.

### DESCRIPTION OF EMBODIMENTS

To make the objectives, technical solutions, and advantages of this application clearer, the following further describes implementations of this application in detail with reference to the accompanying drawings.

It should be understood that "a plurality of" mentioned in this application means two or more. In the descriptions of this application, unless otherwise stated, "/" means "or". For example, A/B may indicate A or B. The term "and/or" in this specification is merely an association relationship for describing associated objects, and indicates that three relationships may exist. For example, A and/or B may indicate the following three cases: Only A exists, both A and B exist, and only B exists. In addition, to clearly describe the technical solutions of this application, words such as "first" and "second" are used to distinguish between same items or similar items with basically the same functions and effects. A person skilled in the art may understand that the words such as "first" and "second" do not limit a quantity or an execution sequence, and the words such as "first" and "second" do not define a definite difference.

Referring to "one embodiment", "some embodiments", or the like that is described in this specification of this application means that specific features, structures, or characteristics described with reference to one or more embodiments are included in the one or more embodiments of this application. Therefore, statements such as "in one embodiment", "in some embodiments", "in some other embodiments" that appear in different parts of this specification do not necessarily refer to same embodiments, but mean "one or more but not all embodiments", unless otherwise specifically emphasized in other manners. The terms "include", "comprise", and "have", and variants thereof all mean "include but are not limited to", unless otherwise specially emphasized in other manners.

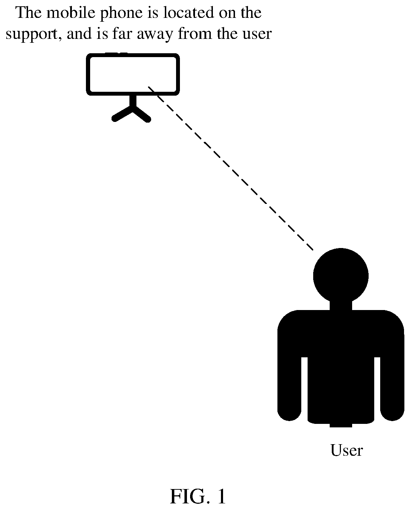

As a function of an electronic device improves, the electronic device may be installed with various applications, for example, instant messaging, ticket purchase, shopping, takeout, phone, alarm clock, game, video, and other applications. The application in the electronic device generates a notification event periodically or aperiodically. In this case, the electronic device usually needs to display a notification corresponding to the notification event. For example, when the instant messaging application in the electronic device receives a new instant messaging message, the electronic device needs to display a corresponding instant messaging notification. A conventional notification display manner is to perform display at the top of a screen by using a banner. However, in some scenarios, the electronic device may be far away from a user. For example, as shown in FIG. 1, the electronic device is located on a support (which may be referred to as a support state, or referred to as a landscape hovering state), and the electronic device is far away from the user. In this case, if a notification is displayed in a conventional manner, a recognition rate of the notification is relatively low, and consequently, the user cannot clearly see the notification.

In an example, a notification display method is provided. The notification may be displayed on the screen in full screen when the electronic device in a standby mode. The standby mode is a mode in which power consumption is very low. In some embodiments, the standby mode is also referred to as a low power mode or a smart desk-clock mode. When the electronic device is on the support, the electronic device may enter the standby mode usually. In this case, the notification is displayed in full screen in the standby mode, so that recognition of the notification can be improved. In this way, the user can clearly see the notification even if the electronic device is far away from the user. However, in some cases, a plurality of to-be-displayed notifications may exist. Embodiments of this application provide a notification display method. When the plurality of notifications exist, a high-recognition display effect of the notification can be maintained, and fast switching between the plurality of notifications can be performed for display, so that the user quickly views different notifications.

For ease of understanding, before the notification display method provided in embodiments of this application is described in detail, application scenarios in embodiments of this application are first described.

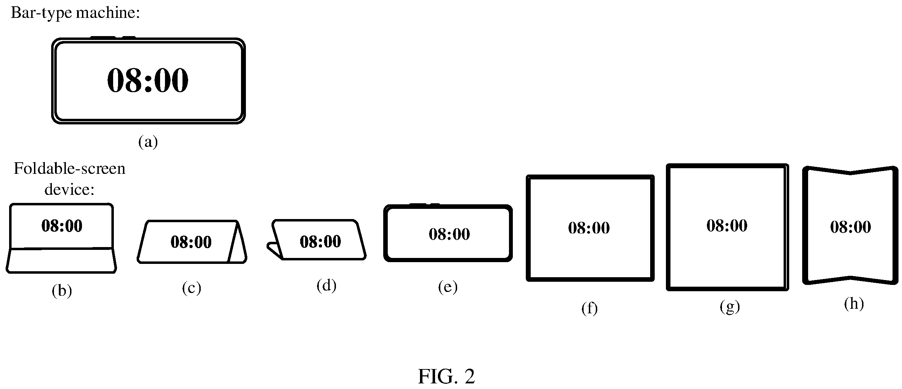

The electronic device can enter the standby mode in the support state. The support state can be positioned in the desk-clock mode or a relax mode. For example, the electronic device is a bar-type machine. The bar-type machine is in the support state when being placed in a landscape mode or being fastened on a support. As shown in (a) in FIG. 2, after the bar-type machine is in the landscape mode, a bottom edge is parallel to a horizontal plane, or an included angle between a bottom edge and a horizontal plane is less than a specific angle, which may also be referred to as that the bar-type machine is in the landscape mode. For another example, the electronic device is a foldable-screen device. The foldable-screen device is in the support state when being in a notebook mode, a tent mode, a calendar mode, an outer-screen landscape mode, an inner-screen landscape mode, an inner-screen portrait mode, or a book state. All support states of the foldable-screen device are shown in (b) in FIG. 2 to (h) in FIG. 2. The notebook mode means that the foldable-screen device has a folding angle ranging from 45 degrees to 145 degrees and stays still for specific duration (for example, 500 ms), as shown in (b) in FIG. 2. The tent mode means that the foldable-screen device has a folding angle ranging from 0 degrees to 85 degrees and stays still for specific duration, as shown in (c) in FIG. 2. The calendar mode means that the foldable-screen device has a folding angle ranging from 0 degrees to 80 degrees and stays still for specific duration, as shown in (d) in FIG. 2. The outer-screen landscape mode means that the foldable-screen device is folded toward an inner screen to be in a shape of a bar-type machine and then stays still for specific duration, as shown in (e) in FIG. 2. The inner-screen landscape mode means that a screen of the foldable-screen device is unfolded to 180 degrees and the foldable-screen device says still in a landscape mode for specific duration, as shown in (f) in FIG. 2. The inner-screen portrait mode means that the screen of the foldable-screen device is unfolded to 180 degrees and the foldable-screen device stays still in a portrait mode for specific duration, as shown in (g) in FIG. 2. The book mode means that a screen of the foldable-screen device is unfolded to a specific angle, so that the foldable-screen device can be like an open book and may stay still for specific duration, as shown in (h) in FIG. 2.

It should be noted that the support states of the electronic device shown in FIG. 2 are merely examples. In another example, another case may be further included. For example, the support state of the foldable-screen device may further include a landscape mode in which the inner screen is folded outward to be in the shape of the bar-type machine. This is not limited in embodiments of this application.

When the electronic device is in the support state, the electronic device can enter the standby mode from different operating states. For ease of understanding, the following describes, by using an example in which the electronic device is a bar-type machine (for example, a mobile phone), several possible cases in which the electronic device enters the standby mode from the support state.

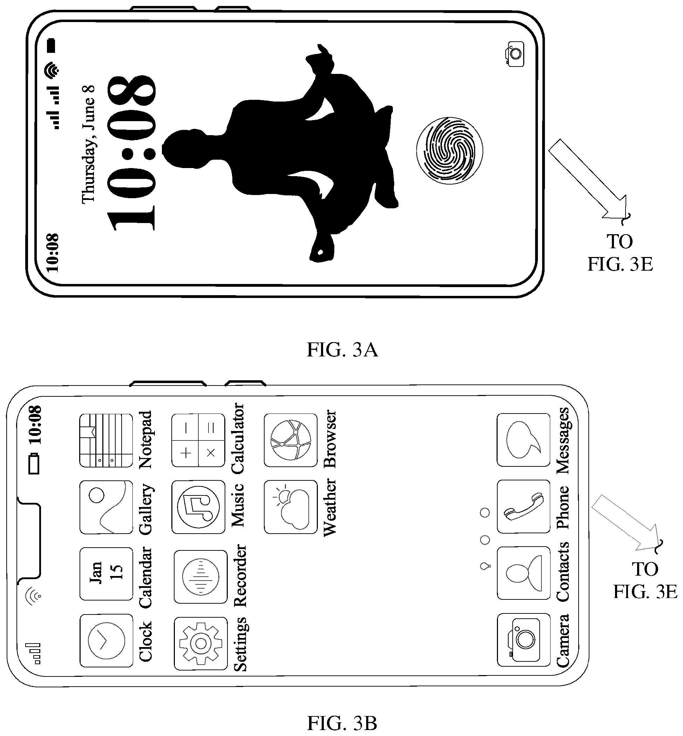

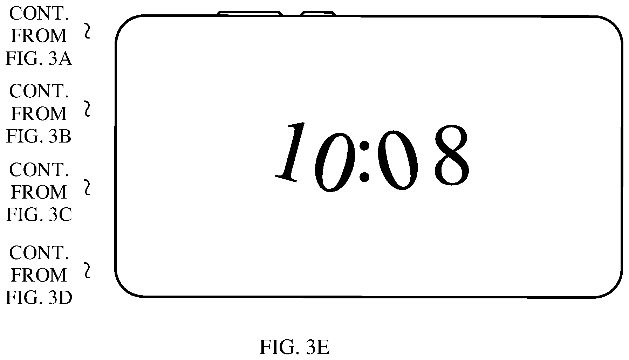

In an example, as shown in FIG. 3A, the electronic device is in a locked state. After the electronic device enters the support state, as shown in FIG. 3E, the electronic device enters the standby mode. For example, when the electronic device displays a lock screen interface, if the electronic device stays still in a landscape mode on the support, the electronic device may automatically enter the standby mode. As an example rather than a limitation, the electronic device displays clock information after entering the standby mode.

In another example, as shown in FIG. 3B, the electronic device is in a home screen state. After the electronic device enters the support state, as shown in FIG. 3E, the electronic device enters the standby mode. For example, when the electronic device displays a home screen, if the electronic device stays still in a landscape mode on the support, the electronic device automatically enters the standby mode. As an example rather than a limitation, the electronic device displays clock information after entering the standby mode.

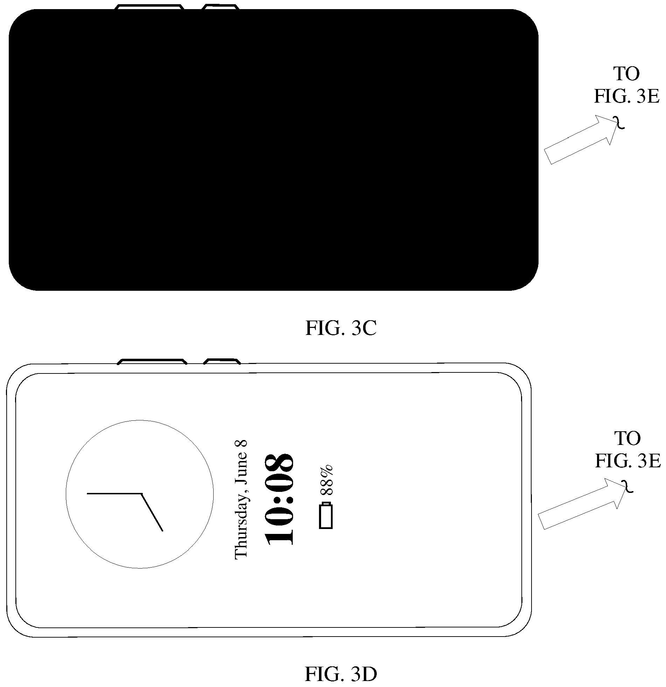

In still another example, as shown in FIG. 3C, the electronic device is in a screen-off state. After the electronic device enters the support state, as shown in FIG. 3E, the electronic device enters the standby mode. For example, when the electronic device is in the screen-off state, if the electronic device stays still in a landscape mode on the support, the electronic device automatically enters the standby mode. As an example rather than a limitation, the electronic device displays clock information after entering the standby mode.

In still another example, as shown in FIG. 3D, the electronic device is in an AOD (always on display) state. After the electronic device enters the support state, as shown in FIG. 3E, the electronic device enters the standby mode. For example, when the electronic device displays an AOD interface, if the electronic device stays still in a landscape mode on the support, the electronic device automatically enters the standby mode. As an example rather than a limitation, the electronic device displays clock information after entering the standby mode.

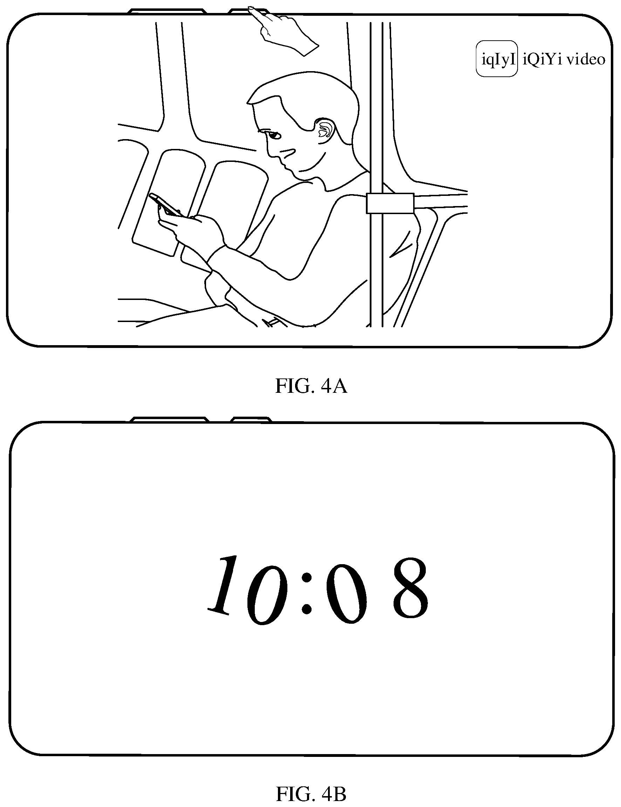

In addition, in addition to entering the standby mode from the several operating states shown in FIG. 3A to FIG. 3E, the electronic device may enter the standby mode from any another use state. For example, as shown in FIG. 4A, the user makes the electronic device stay still in a landscape mode on the support, and the electronic device is playing a video. In this case, if the user presses a power key of the electronic device, in response to the press operation performed by the user on the power key, as shown in FIG. 4B, the electronic device enters the standby mode. As an example rather than a limitation, the electronic device displays clock information after entering the standby mode.

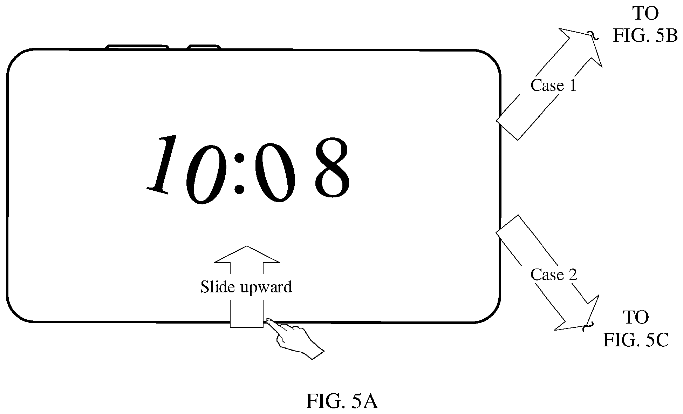

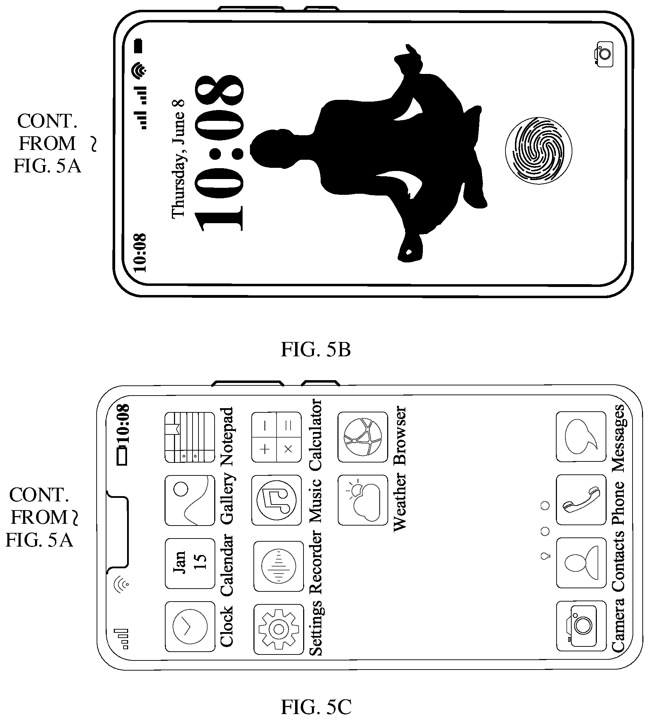

After the electronic device enters the standby mode, if the user wants the electronic device to exit the standby mode, exit of the electronic device may be triggered in a plurality of manners. As an example rather than a limitation, the following two possible implementations may be included:
In a first possible implementation, as shown in FIG. 5A, the user may slide upward from the bottom of the screen of the electronic device, and the electronic device exits the standby mode in response to the operation that the user slides upward from the bottom of the screen. To be specific, in the standby mode, if the electronic device detects the operation that the user slides upward from the bottom of the screen, the electronic device does not trigger multitasking, the standby mode does not exist in a multitasking manager, and the electronic device exits the standby mode in this case. In an example of this application, after exiting the standby mode, the electronic device may redisplay an operating state existing before entering the standby mode. For example, as shown in FIG. 5B, when the electronic device enters the standby mode from the lock screen interface, in response to the operation that the user slides upward from the bottom of the screen, the electronic device redisplays the lock screen interface after exiting the standby mode. For another example, as shown in FIG. 5C, when the electronic device enters the standby mode from the home screen, in response to the operation that the user slides upward from the bottom of the screen, the electronic device redisplays the home screen after exiting the standby mode. As an example rather than a limitation, if the electronic device always remains in the support state, after exiting the standby mode and redisplaying the home screen, the electronic device may no longer enter the standby mode, and no longer enter the standby mode when the electronic device is in the support state again.

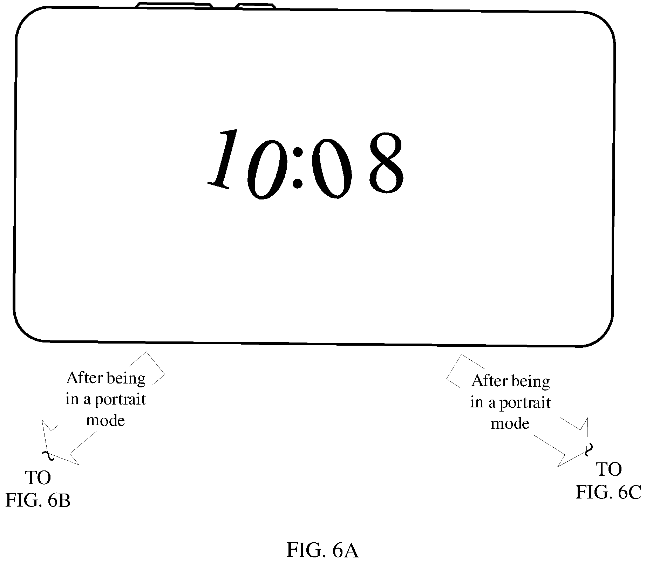

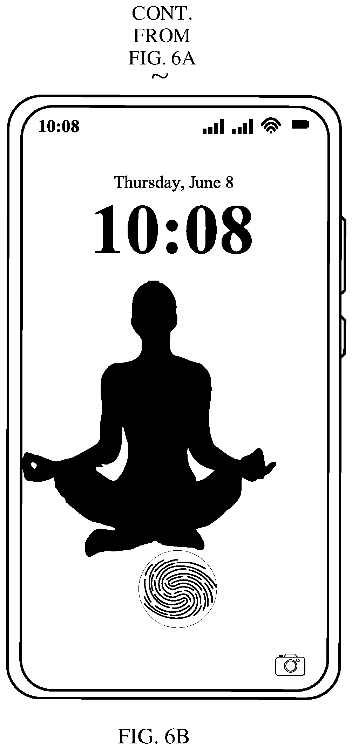

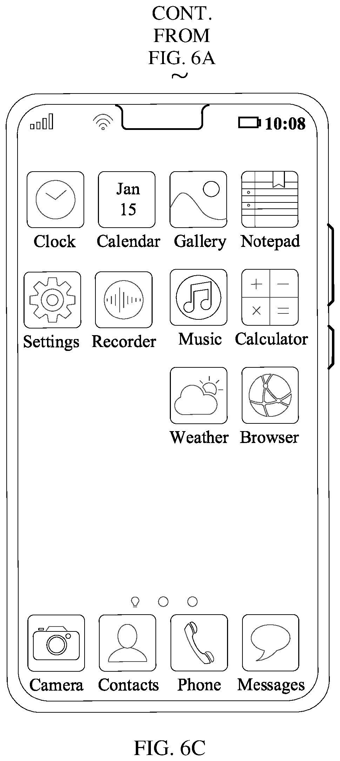

In a second possible implementation, as shown in FIG. 6A, the electronic device enters the standby mode. Then, if the electronic device exits the support state, for example, if the user takes the electronic device away from the support or makes the electronic device in the portrait mode, the electronic device automatically exits the standby mode, and redisplays a display state existing before entering the standby mode. For example, as shown in FIG. 6B, when the electronic device enters the standby mode from the lock screen interface, if the user makes the electronic device be in the portrait mode, the electronic device exits the standby mode after detecting this operation, and redisplays the lock screen interface. For another example, as shown in FIG. 6C, when the electronic device enters the standby mode from the home screen, if the user makes the electronic device be in the portrait mode, the electronic device exits the standby mode after detecting this operation, and redisplays the home screen. As an example rather than a limitation, the electronic device may detect, by using a sensor such as a gyroscope, whether the electronic device is in a landscape state or a portrait state.

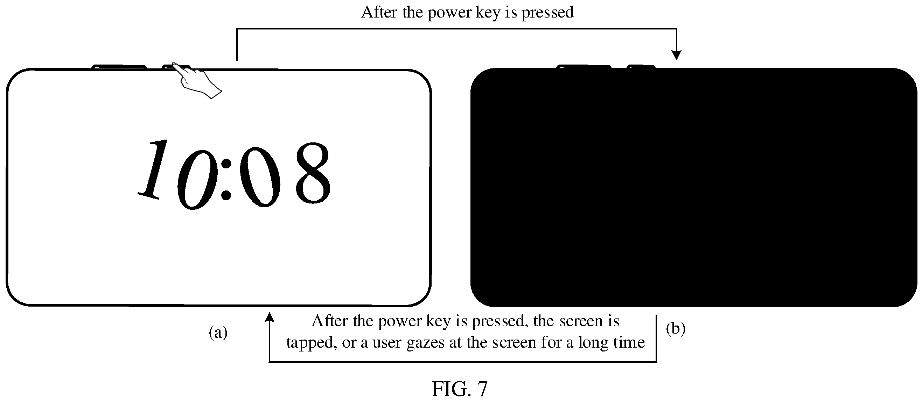

In an example of this application, the electronic device further supports the user in disabling display of the standby mode. For example, as shown in (a) in FIG. 7, after the electronic device enters the standby mode, if the user wants to control the electronic device to not display the standby mode, the user may press the power key. In response to a press operation performed by the user on the power key, as shown in (b) in FIG. 7, the electronic device no longer displays the standby mode, that is, enters a screen-off mode. In an example, after the user presses the power key again or touches the screen, the electronic device displays the standby mode again, that is, enters a state shown in (a) in FIG. 7 again. In another example, if an intelligent recognition function of the electronic device is turned on, for example, if the user turns on the intelligent recognition function along a path "Settings -> Accessibility", in a screen-off case (that is, an interface shown in (b) in FIG. 7 is displayed), if the user gazes at the screen for a long time, the electronic device redisplays the standby mode, that is, redisplays an interface shown in (a) in FIG. 7.

In an example of this application, when a lock screen password is set for the electronic device, after the user triggers the electronic device to disable display of the standby mode, that is, after the electronic device enters a state shown in (b) in FIG. 7, if a press operation performed by the user on the power key of the electronic device is received, before redisplaying the standby mode, the electronic device may first enter an unlock interface in response to the press operation performed by the user on the power key, and then the user unlocks in the unlock interface. For example, the user may unlock by entering an unlock password or through face recognition. As an example rather than a limitation, in the standby mode, the electronic device may disable a fingerprint unlocking function (including an in-display fingerprint unlocking function and a fingerprint unlocking function of the power key). Correspondingly, the electronic device performs unlock authentication. If authentication succeeds, the electronic device redisplays the standby mode. Otherwise, if authentication fails, the electronic device may not redisplay the standby mode.

In addition, it should be noted that both FIG. 3A to FIG. 3E and FIG. 4A and FIG. 4B are described by using examples in which the clock information is displayed after the standby mode is entered, that is, a clock and weather theme display mode is entered. In another example, the standby mode further supports other theme display modes. For example, the other theme display modes further include an album (for example, Gallery) theme display mode and a video theme display mode. The clock and weather theme display mode is a theme display mode in which the clock information and weather information are pushed, the album theme display mode is a theme display mode in which a picture in an album is pushed, and the video theme display mode is a theme display mode in which video content is pushed.

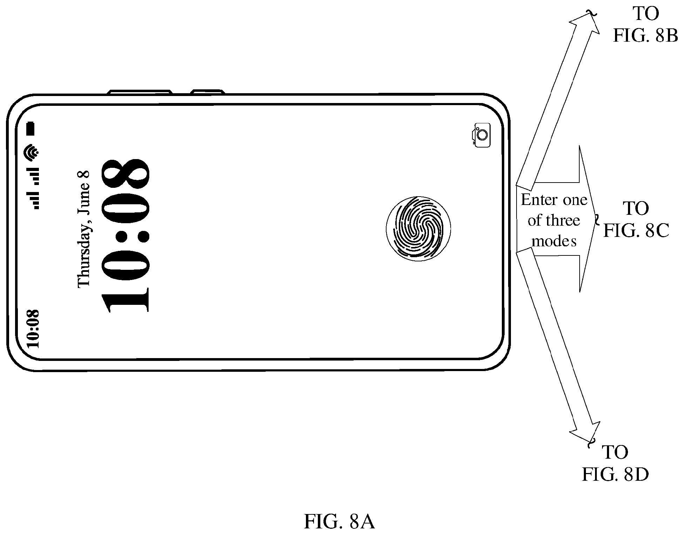

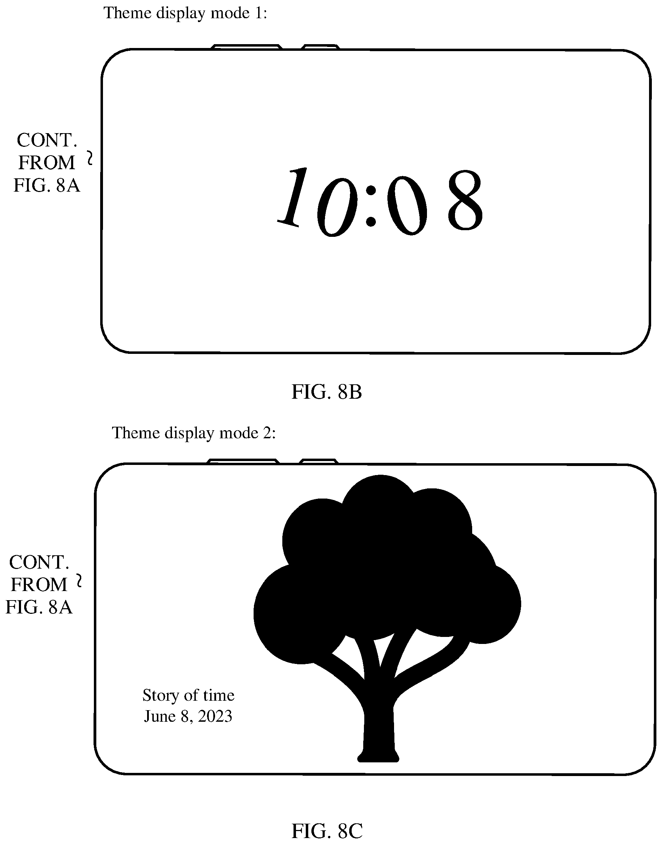

As shown in FIG. 8A, an example in which the electronic device is in the locked state is used. In this case, after the electronic device is in the support state, the following several theme display modes may be entered:
In a possible case, as shown in FIG. 8B, after entering the standby mode, the electronic device displays the clock information, that is, enters the clock and weather theme display mode.

In another possible case, as shown in FIG. 8C, after entering the standby mode, the electronic device displays one picture in the album (namely, Gallery), that is, enters the album theme display mode. For example, the electronic device may randomly select one picture from the album for display, or may select one picture from the album for display based on a policy, for example, may display a latest captured picture, or may display a picture captured on this today last year. This is not limited in this embodiment of this application.

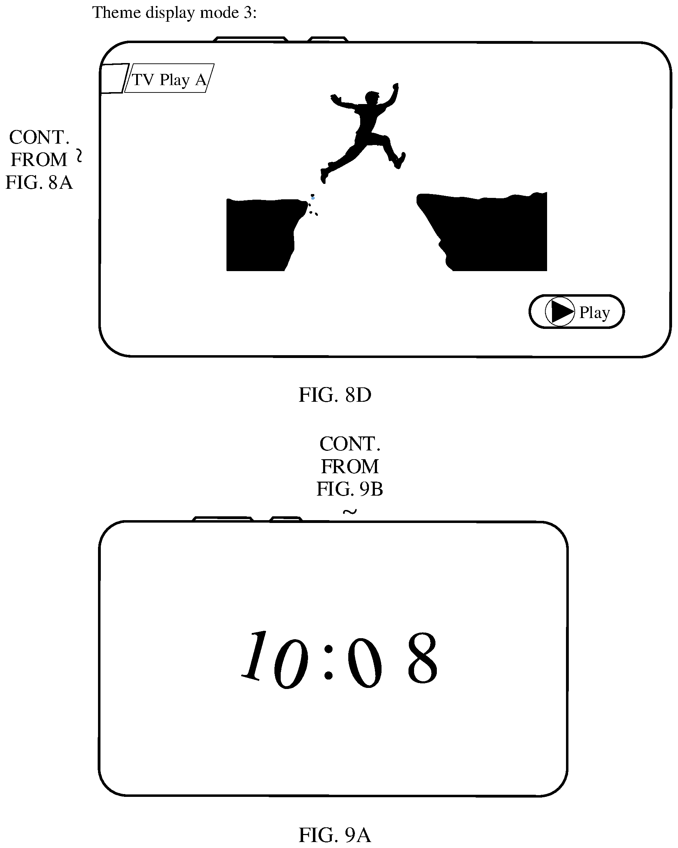

In another possible case, as shown in FIG. 8D, after entering the standby mode, the electronic device displays a video picture of a target video, that is, enters the video theme display mode. The target video is a specific video played in a video application that supports the standby mode in the electronic device, and the video application that supports the standby mode belongs to a whitelist, which may be subsequently referred to as a whitelist video application. In an example, the target video may be a video watched by the user recently in the whitelist video application. If the user recently watches the video only in one whitelist video application, a specific video played by the electronic device in the whitelist video application is determined as the target video. For example, the specific video may be one video that is played most recently. If the user recently watches different videos in a plurality of whitelist video applications, the electronic device may select, as the target video, one video watched by the user at a time closest to a current time in the whitelist video application. In a possible implementation, if the user recently watches no video in the whitelist video application, the electronic device may display a home page of the whitelist video application, that is, display a video push page of the whitelist video application. If there are a plurality of whitelist video applications, one whitelist video application may be selected from the plurality of whitelist video applications. For example, the whitelist video application may be randomly selected, and then a video push page of the whitelist video application is displayed.

Optionally, as shown in FIG. 8D, the video picture includes a "Play control". The user may tap the "Play control" In response to a tap operation performed by the user on the "Play control", the electronic device may play a video to which the video picture belongs, that is, play the target video.

In an example of this application, if the electronic device enters the standby mode for a first time, the electronic device may enter the clock and weather theme display mode by default. If the electronic device enters the standby mode not for a first time, the electronic device may determine the theme display mode based on an intelligent recommendation policy. The intelligent recommendation policy may be set according to a requirement. The intelligent recommendation policy may comprehensively consider elements such as a time, a location, and active user feedback. In an example, the electronic device may perform display in a theme display mode existing before exiting the standby mode last time. For example, if the clock information is displayed after the standby mode is entered last time, and the user actively slides to the album theme display mode, the picture in the album may be displayed after the standby mode is entered this time, that is, enters the album theme display mode. In another example, the user may further collect statistics about a theme display mode used by the electronic device after the standby mode is entered in different time periods, to perform display based on a current time period. For example, if statistics are collected, after the electronic device enters the standby mode in a specific time period, the user actively triggers the electronic device to switch to the video theme display mode. For example, after the electronic device enters the standby mode in a noontime time period, the user triggers the electronic device to switch to the video theme display mode. When the electronic device enters the standby mode in the noontime time period, the electronic device enters the video theme display mode, that is, displays the video picture.

It should be noted that the foregoing display manners after the standby mode is entered are merely examples. In another example, another implementation may be further included. For example, each time the electronic device enters the standby mode, one theme display mode may be randomly selected from the three theme display modes for display. In addition, the electronic device may further support another theme display mode in the standby mode, for example, may further support a motion theme display mode or a takeout theme display mode. This is not limited in this embodiment of this application.

In addition, it should be further noted that the user may slide leftward/rightward, to trigger the electronic device to switch between different theme display modes. For example, if the electronic device displays the clock information after entering the standby mode, when the user slides leftward (or rightward), the electronic device enters another theme display mode in response to the operation that the user slides leftward (or rightward), for example, enters the video theme display mode. In addition, the user may further slide upward/downward, to trigger the electronic device to switch between different display styles in a same theme display mode. For example, when the user slides upward (or downward) in the video theme display mode, the electronic device displays another video picture in the video theme display mode in response to the operation that the user slides upward (or downward).

It may be learned from the foregoing embodiments that, when the electronic device enters the standby mode, the electronic device is in the support state. In a possible case, the electronic device is far away from the user. For example, when the user does yoga, the mobile phone is placed on the support. In this case, if a new notification event exists in the electronic device, and a notification corresponding to the new notification event is displayed in a conventional manner, it is prone to relatively low recognition of the notification. Consequently, the user cannot clearly see the notification at a far distance. Therefore, in this embodiment of this application, when the electronic device enters the standby mode, and the notification is obtained, the electronic device displays the notification in full screen, to highlight the notification, thereby improving recognition of the notification. In this way, the user can clearly see the notification even when the electronic device is far away from the electronic device.

In an example of this application, types of the to-be-displayed notifications include an in-progress notification and a non-in-progress notification. The in-progress notification is usually a non-transient notification. A notification event corresponding to the in-progress notification is an event that needs to be performed for a long time, namely, a continuous event. For example, the in-progress notification includes a music notification, a YoYo card notification, a call notification, an alarm clock notification, and a countdown notification. The non-in-progress notification is usually a transient notification. A notification event corresponding to the non-in-progress notification does not need to be performed for a long time, and is a single event, in other words, a non-continuous event. In some embodiments, the non-in-progress notification may be referred to as a banner notification. For example, the non-in-progress notification includes a weather notification, a shopping notification, an SMS message notification, and an instant messaging notification. Next, for the two types of notifications, a scenario in which the electronic device displays the notification in the standby mode is described. The following provides descriptions by using an example in which the electronic device displays the clock information after entering the standby mode.

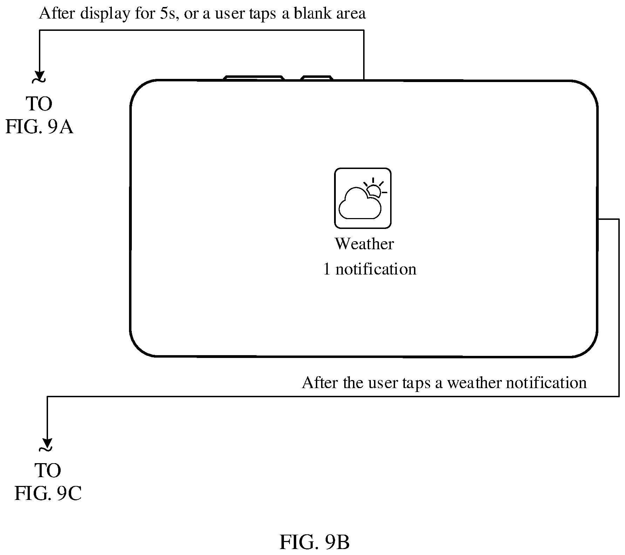

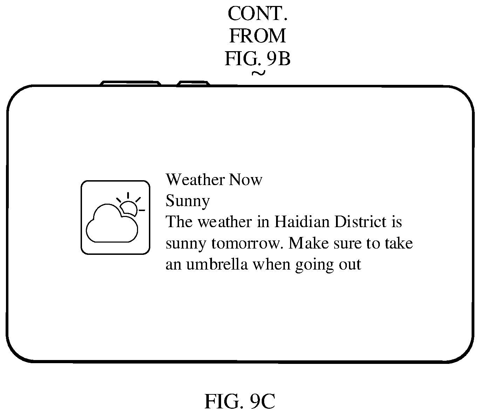

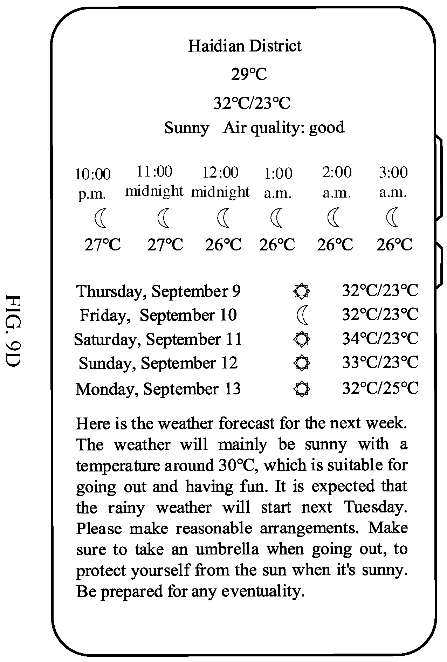

In a possible implementation, as shown in FIG. 9A, the electronic device enters the standby mode. Then, the electronic device obtains the to-be-displayed notification. The obtained to-be-displayed notification may be sent by another device, for example, pushed by a background server, or may be triggered by an application in the electronic device. For example, the to-be-displayed notification is a non-in-progress notification. For example, the non-in-progress notification is a weather notification. As shown in FIG. 9B, the electronic device displays the weather notification in full screen. For example, the electronic device may add a non-transparent layer to a display interface (which may be briefly referred to as a standby interface) in a current standby mode, and then display the weather notification at the added layer, for example, may display the weather notification at a center location at the added layer. In an example, the electronic device enables a notification text content hiding function. Therefore, the electronic device may hide notification text content when displaying the weather notification. For example, as shown in FIG. 9B, only a weather icon and new notification prompt information are displayed. The new notification prompt information is "One notification". The notification may be referred to as a hidden notification. Then, if the user does not perform any operation on the weather notification, the electronic device automatically resumes display of the clock information in the standby mode after displaying the weather notification for specific duration (for example, 5s), that is, redisplays an interface shown in FIG. 9A, and no longer displays the weather notification. Alternatively, if the user taps a blank location in an interface or slides upward from the bottom of the electronic device, the electronic device may resume display of the clock information in the standby mode in response to the tap operation performed by the user on the blank location or in response to the operation that the user slides upward from the bottom of the screen. If the user taps a hidden weather notification, as shown in FIG. 9C, in response to the tap operation performed by the user on the hidden weather notification, the electronic device displays the notification text content of the weather notification, for example, displays notification text content such as "The weather in Haidian District is sunny tomorrow. Make sure to take an umbrella when going out". In this way, the user can quickly learn of notification details. Then, if the user taps again the weather notification whose notification text content is displayed, as shown in FIG. 9D, in response to the tap operation performed by the user on the weather notification whose notification text content is displayed, the electronic device enters an application detail page of the weather application. In this way, the user can quickly learn of weather details.

Optionally, when the electronic device displays the hidden weather notification, if the user taps the hidden weather notification, in response to the tap operation performed by the user on the hidden weather notification, the electronic device may directly enter an application detail page of the weather application, that is, the electronic device directly jumps from an interface shown in FIG. 9B to an interface shown in FIG. 9D.

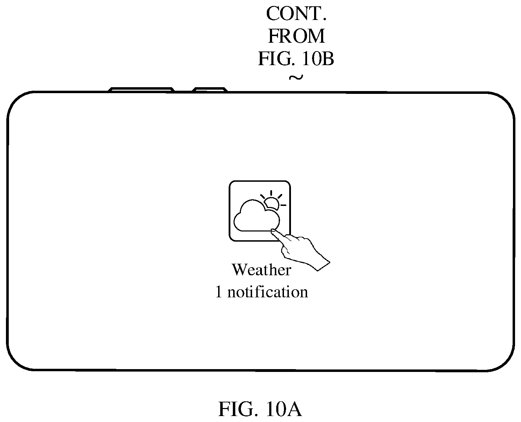

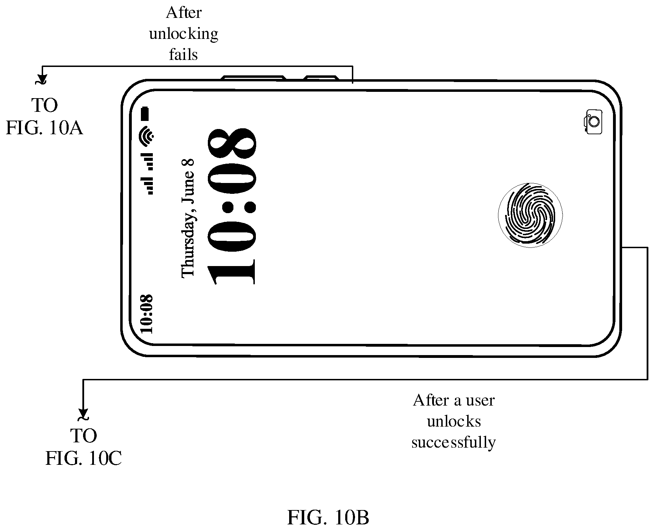

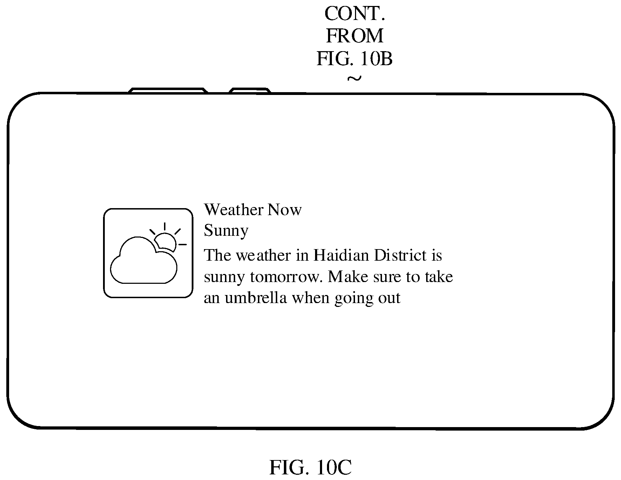

Optionally, as shown in FIG. 10A, when the electronic device displays the hidden weather notification, if the user taps the hidden weather notification, when the lock screen password is set for the electronic device, as shown in FIG. 10B, in response to the tap operation performed by the user on the hidden weather notification, the electronic device displays an unlock interface, to indicate the user to unlock. Correspondingly, the user may unlock the user by entering a fingerprint or a password, or through face recognition. As shown in FIG. 10C, if the user unlocks successfully, the electronic device displays the notification text content. Otherwise, if the user unlocks unsuccessfully, the electronic device does not display the notification text content, for example, may continue to display the hidden weather notification, that is, continue to display an interface shown in FIG. 10A.

It should be noted that, the foregoing provides descriptions by using an example in which the electronic device enables the notification text content hiding function. In another example, if the electronic device does not enable the notification text content hiding function, and the notification is a non-custom notification, in other words, a third-party application provides the notification text content, after the electronic device obtains a notification event, the electronic device directly displays notification text content corresponding to the notification event, for example, may directly display an interface shown in FIG. 9C without displaying the hidden notification, that is, without displaying the interface shown in FIG. 9B.

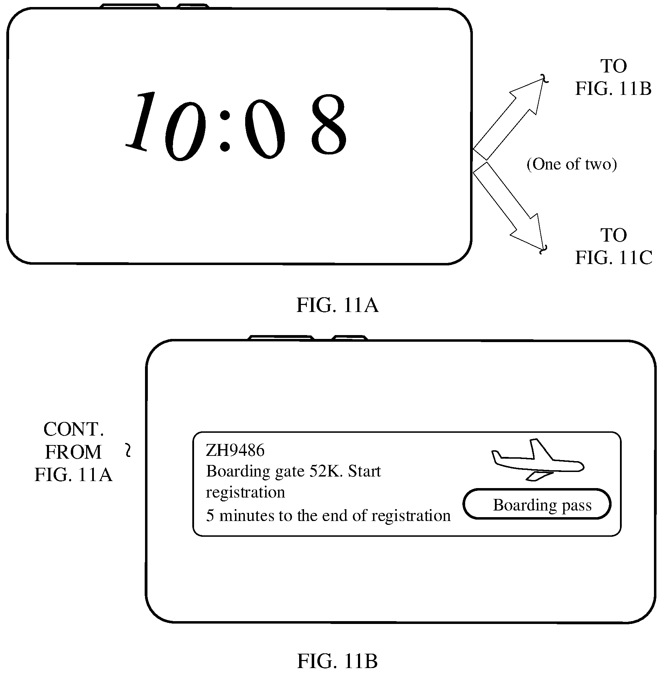

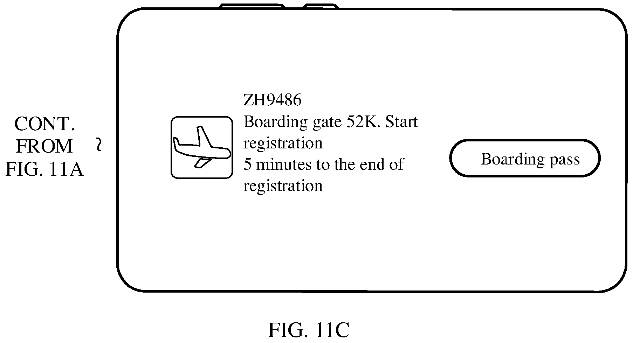

In another possible case, the to-be-displayed notification is an in-progress notification. In this case, the electronic device may display the notification in either of two manners. In an example, the in-progress notification is a YoYo card notification. If the electronic device obtains a flight reminder card notification, a to-be-displayed YoYo card notification is generated and is used as the flight reminder card notification. After the electronic device enters the standby mode as shown in FIG. 11A, if the flight reminder card notification is received, as shown in FIG. 11B, the electronic device may add a non-transparent layer to a current display interface, and then display the flight reminder card notification at the added layer, for example, display the flight reminder card notification at a center location at the added layer; or as shown in FIG. 11C, the electronic device may display the flight reminder card notification at a center location at an added layer in an immersive display manner. The notification and the added layer are integrated in the immersive display manner.

As shown in FIG. 11B or FIG. 11C, the electronic device further displays a "Boarding pass" control while displaying the flight reminder card notification. When the user wants to view a boarding pass, the user may tap the "Boarding pass" control. In response to a trigger operation performed by the user on the "Boarding pass" control, the electronic device enters a boarding pass detail page. The boarding pass detail page includes an electronic boarding pass. In this way, the user may trigger, through one tap in the standby mode, the electronic device to display the boarding pass detail page, so that the user can quickly use the electronic boarding pass to board, to avoid a need to search for the electronic boarding pass from a booking application.

Optionally, when the lock screen password is set for the electronic device, after the user taps the "Boarding pass" control, the electronic device displays the unlock interface in response to a trigger operation performed by the user on the "Boarding pass" control, to indicate the user to unlock. The user may perform unlock through face recognition or by entering a password, and correspondingly, the electronic device performs unlock authentication. If the user unlocks successfully, that is, unlock authentication succeeds, the electronic device displays the boarding pass detail page. Otherwise, if the user unlocks unsuccessfully, that is, unlock authentication fails, the electronic device does not display the boarding pass detail page.

It should be noted that this embodiment of this application is merely described by using an example in which the electronic device further displays the "Boarding pass" control while displaying the flight reminder card notification. In another example, the electronic device may not display the "Boarding pass" control, and the flight reminder card notification may be triggered. In this case, when the user wants to view the boarding pass, the user may tap the flight reminder card notification. In response to a tap operation performed by the user on the flight reminder card notification, the electronic device displays the boarding pass detail page in a related application or the unlock interface.

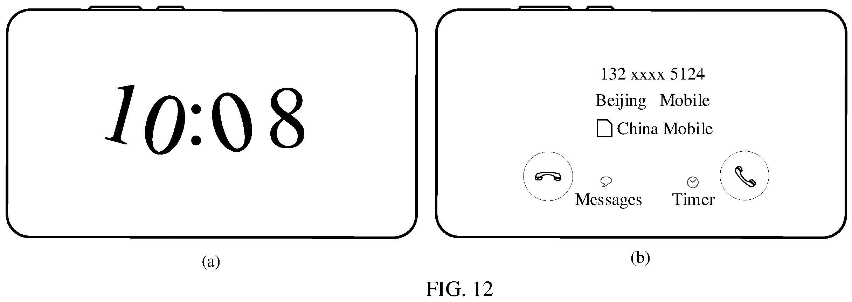

In another example, the in-progress notification may alternatively be a call notification. For example, as shown in (a) in FIG. 12, the electronic device enters the standby mode. Then, when an incoming call is received, as shown in (b) in FIG. 12, the electronic device displays the call notification in a current interface. For example, the call notification includes an incoming call number, an answer control, and a hang up control. Therefore, the user may answer or hang up an incoming call according to a requirement.

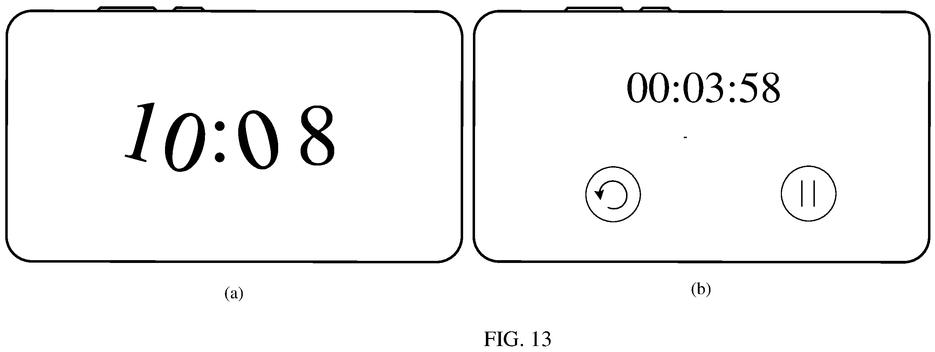

In another example, the in-progress notification may also be a countdown notification. For example, the user sets a countdown task in the electronic device, for example, sets a countdown of 4 minutes. As shown in (a) in FIG. 13, the electronic device enters the standby mode. Then, as shown in (b) in FIG. 13, the electronic device displays the countdown notification on a current display interface. For example, the countdown notification includes a timing time, a refresh control, and a pause control. In this way, the user may re-time or pause timing according to a requirement. When the countdown ends, the electronic device may give a prompt in a preset manner, for example, may give a vibration prompt or a ring prompt. In addition, end prompt information is displayed in the countdown notification. For example, the end prompt information is "The countdown ends". An off control may be further provided in the countdown notification. The user may slide the off control. In response to a slide operation performed by the user on the off control, the electronic device does not display the countdown notification. Alternatively, when end prompt information is displayed in the countdown notification, if the user does not operate the countdown notification within specific duration, the electronic device may automatically no longer display the countdown notification.

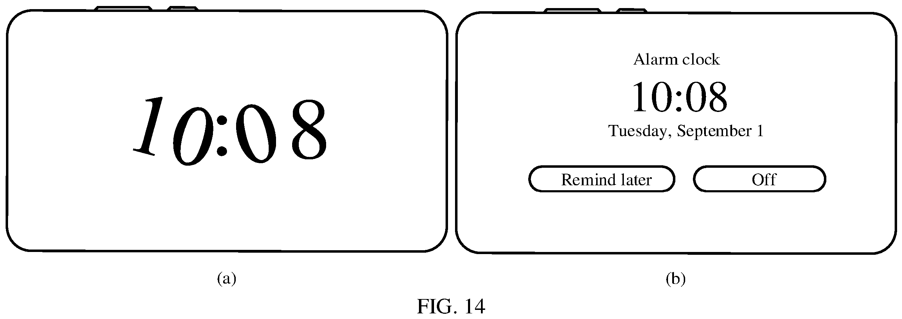

In another example, the in-progress notification may alternatively be an alarm clock notification. For example, the user sets an alarm clock of 10:08 in the electronic device. As shown in (a) in FIG. 14, the electronic device enters the standby mode. Then, when an alarm clock event is triggered (that is, an alarm clock is triggered), as shown in (b) in FIG. 14, the electronic device displays the alarm clock notification in a current display interface. For example, the alarm clock notification includes a current time, a snooze reminder control, and an off control. In this way, the user can operate the alarm clock according to a requirement.

It should be noted that the foregoing several in-progress notifications are merely examples, and the call notification, the alarm clock notification, and the countdown notification are interruptive notifications. In another example, the in-progress notification may further include another notification, for example, may further include a music notification. This is not limited in this embodiment of this application.

It should be noted that, a conventional notification display manner of the banner notification is as follows: When the electronic device enables the notification text content hiding function, the electronic device preferentially displays the hidden notification. The electronic device displays the notification text content if the user taps the hidden notification and unlocks successfully. Therefore, in embodiments of this application, the notification display manner is still used for the non-in-progress notification, to reduce modifications of the notification display manner, so that the user can continue to adapt to such a display rule. Because the in-progress notification has a high priority, in embodiments of this application, notification text content of the in-progress notification may be directly displayed, so that the user can quickly view the notification text content.

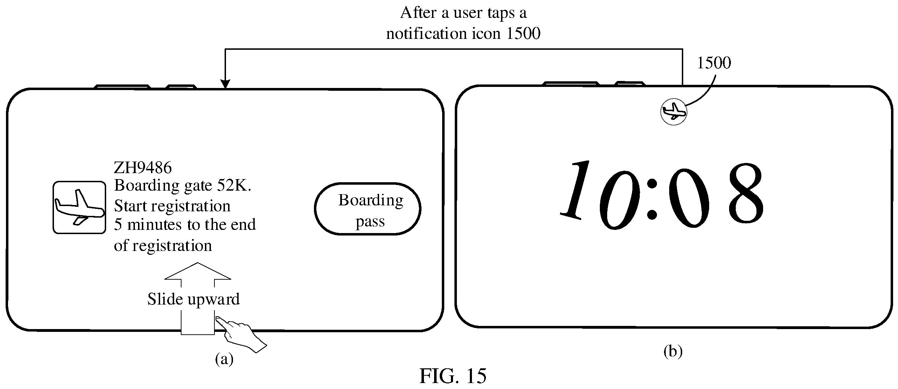

In an example of this application, when the to-be-displayed notification is an in-progress notification, in addition to displaying the in-progress notification in full screen, the electronic device can further collapse the in-progress notification into a notification icon (which may also be referred to as a persistent icon). For example, the notification icon may be displayed in a shape of a capsule. For example, as shown in (a) in FIG. 15, the electronic device displays the flight reminder card notification in the immersive display manner. If the user does not need to view the boarding pass currently, the electronic device may slide upward from the bottom of the screen. In response to an operation that the user slides upward from the bottom of the screen, the electronic device collapses the flight reminder card notification into a notification icon in the standby mode, as shown by 1500 in (b) in FIG. 15. In an implementation, when the user wants to review the flight reminder card notification, the user may tap the notification icon 1500. The electronic device redisplays the flight reminder card notification in response to the tap operation performed by the user on the notification icon 1500. In another implementation, when the user taps the notification icon 1500, the electronic device may directly enter the boarding pass detail page of the related application in response to the tap operation performed by the user on the notification icon 1500. In this case, the electronic device exits the standby mode.

It should be noted that the foregoing provides descriptions by using an example in which the electronic device displays the flight reminder card notification in the immersive display manner. In another example, if the electronic device does not display the flight reminder card notification in the immersive manner, for example, as shown in FIG. 11B, the electronic device displays the flight reminder card notification at a center location on the screen. When the user wants to collapse the flight reminder card notification into a notification icon, the user may select the flight reminder card notification and slide upward or drag the flight reminder card notification. Correspondingly, in response to the operation that the user selects the flight reminder card notification and slides upward or drags the flight reminder card notification, the electronic device collapses the flight reminder card notification into the notification icon.

In addition, it should be noted that, the foregoing provides descriptions by using an example in which the user triggers the electronic device to collapse the flight reminder card notification into the notification icon. In another example, if the user does not operate the displayed flight reminder card notification within a period of time (for example, 5s), the electronic device may collapse the flight reminder card notification into the notification icon. In this way, the flight reminder card notification can be collapsed automatically when the user does not need to view the flight reminder card notification, to avoid shielding the clock information displayed in the standby mode.

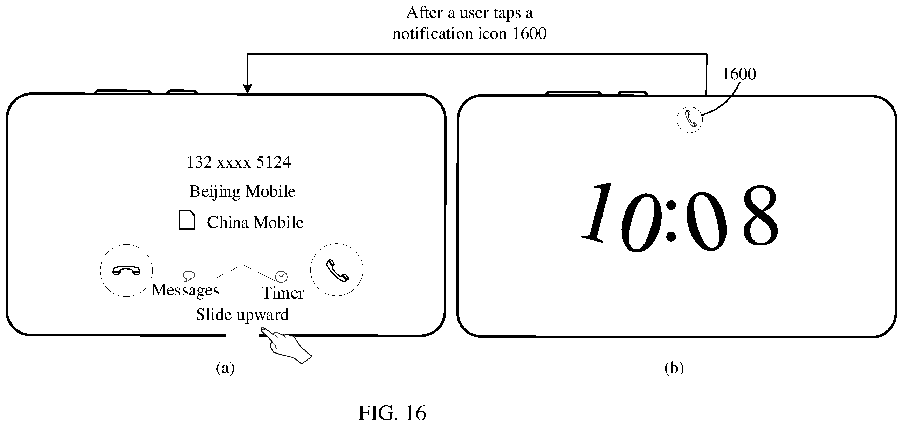

Certainly, after the electronic device displays another in-progress notification (for example, an interruptive notification) in full screen in the standby mode, if the user slides upward from the bottom of the screen, the electronic device may be triggered to collapse the another in-progress notification into the notification icon. For example, the call notification is used as an example. As shown in (a) in FIG. 16, after receiving the incoming call, the electronic device displays the call notification on the screen in full screen. When the user slides upward from the bottom of the screen, in response to this slide operation performed by the user, the electronic device collapses the call notification into a notification icon, as shown by 1600 in (b) in FIG. 16. In an implementation, when the user needs to review the call notification, the user may tap the notification icon 1600. The electronic device redisplays the call notification in response to the tap operation performed by the user on the notification icon 1600. In another implementation, when the user taps the notification icon 1600, the electronic device may directly enter a call application interface in response to the tap operation performed by the user on the notification icon 1600.

In an example of this application, if a notification event corresponding to a specific in-progress notification is completed, the electronic device no longer displays the in-progress notification, and no longer displays a notification icon corresponding to the in-progress notification. For example, for the flight reminder card notification, if a boarding event is completed, the electronic device no longer displays the flight reminder card notification, and no longer displays a notification icon corresponding to the flight reminder card notification.

In an example of this application, if the electronic device is performing a game service before entering the standby mode, after entering the standby mode, when receiving a game notification, the electronic device displays the game notification in full screen. Then, if the user slides upward from the bottom of the screen, in response to the operation that the user slides upward from the bottom of the screen, the electronic device collapses the game notification into a notification icon, and displays an interface in the standby mode. Then, if the user taps the notification icon, the electronic device may directly enter a game interface. That is, for a service that requires real-time attention of the user, an application interface may be directly entered after the user taps the notification icon.

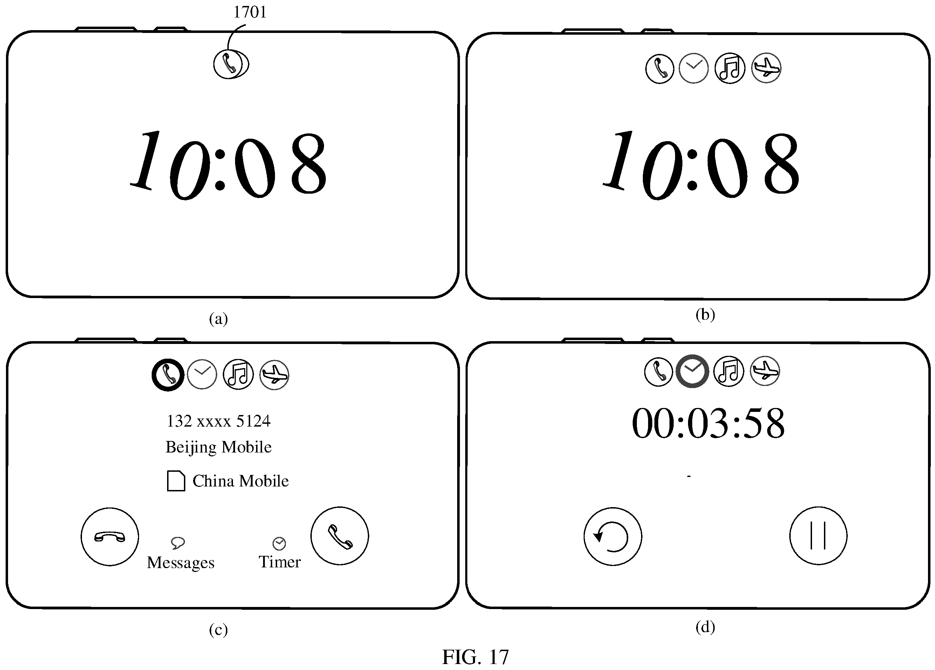

In an example of this application, when the electronic device obtains a plurality of to-be-displayed in-progress notifications, that is, a plurality of tasks coexist, the electronic device can display notification icons of the plurality of in-progress notifications in the standby mode. In an example, as shown in (a) in FIG. 17, when the plurality of in-progress notifications are received in the standby mode, and the plurality of in-progress notifications are collapsed into and displayed as notification icons, the electronic device may display the plurality of notification icons in a stacked state, as shown by 1701 in (a) in FIG. 17. For example, if the electronic device receives the flight reminder card notification in the standby mode, the electronic device displays the flight reminder card notification. When a collapsed display condition (for example, the user does not operate within a period of time) is met, the electronic device collapses the flight reminder card notification into the notification icon. Then, the electronic device receives the incoming call, and the electronic device displays the call notification, and display the notification icon of the call notification on the notification icon of the flight reminder card notification, that is, stack the notification icons for display.

It should be noted that the embodiment shown in (a) in FIG. 17 is merely an example. In a possible case, before receiving a new in-progress notification, the electronic device has displayed a notification icon in the standby mode, for example, has displayed the notification icon corresponding to the call notification. When receiving the new in-progress notification, for example, receiving the flight reminder card notification, the electronic device displays the flight reminder card notification in full screen, and may expand the notification icon corresponding to the call notification and the notification icon corresponding to the flight reminder card notification for display. The notification icon corresponding to the flight reminder card notification is displayed in a selected state, and the notification icon corresponding to the call notification is displayed in an unselected state. After the collapsed display condition of the flight reminder card notification is met, the electronic device does not display the flight reminder card notification. In this case, the notification icon corresponding to the call notification and the notification icon corresponding to the flight reminder card notification are still expanded for display, and both are displayed in an unselected state. If the user does not operate either of the two notification icons within specific duration (for example, 5s), or the user triggers a notification icon stacking operation (for example, multi-finger pinching of the displayed notification icons), the electronic device stacks the two notification icons for display, and the notification icon corresponding to the flight reminder card notification may be displayed on the notification icon corresponding to the call notification.

In another possible case, before receiving a new in-progress notification, the electronic device displays two or more notification icons in the standby mode, for example, including a notification icon corresponding to the countdown notification and a notification icon corresponding to the call notification. If the two notification icons are stacked for display, after receiving a new in-progress notification, for example, receiving the flight reminder card notification, the electronic device displays the flight reminder card notification, and may stack the notification icon corresponding to the flight reminder card notification on the top of the two existing notification icons for display. If the two notification icons are expanded for display, after receiving a new in-progress notification, for example, receiving the flight reminder card notification, the electronic device displays the flight reminder card notification, and may continue to expand the original two notification icons and the notification icon corresponding to the flight reminder card notification for display. If the user does not operate any notification icon within specific duration (for example, 5s) or the user triggers a notification icon stacking operation, the electronic device stacks these notification icons for display, that is, stacks the notification icon corresponding to the countdown notification icon, the notification icon corresponding to the call notification, and the notification icon corresponding to the flight reminder card notification for display. The notification icon corresponding to the flight reminder card notification may be displayed on the top.

In another example, an in-progress notification is received in the standby mode, and the electronic device displays the in-progress notification in full screen, for example, the flight reminder card notification. Then, the electronic device receives another in-progress notification, for example, the call notification. In this case, the following two possible implementations are included:
In an optional implementation, the electronic device may display the call notification on the flight reminder card notification. In this way, if the user slides upward from the bottom of the screen within specific duration (for example, 5s), in response to this operation performed by the user, the electronic device collapses the call notification into the notification icon. In this case, the electronic device displays the flight reminder card notification in full screen. The user may slide upward from the bottom of the screen again. In response to this operation performed by the user, the electronic device collapses the flight reminder card notification into the notification icon, and stacks the notification icon of the flight reminder card notification under the notification icon of the call notification for display. If the user does not collapse the call notification within specific duration (for example, 5s), the electronic device may automatically collapse the flight reminder card notification into the notification icon, and does not display the flight reminder card notification. Alternatively, after displaying the call notification on the flight reminder card notification, the electronic device may further expand the notification icon corresponding to the call notification and the notification icon corresponding to the flight reminder card notification for display. The notification icon corresponding to the call notification is displayed in a selected state, and the notification icon corresponding to the flight reminder card notification is displayed in an unselected state. If the user collapses the call notification within specific duration, the electronic device displays the flight reminder card notification in full screen. The notification icon corresponding to the flight reminder card notification is displayed in a selected state, and the notification icon corresponding to the call notification is displayed in an unselected state. If the user does not collapse the call notification within specific duration, the electronic device may automatically cancel display of the flight reminder card notification.

In another optional implementation, the electronic device may replace the flight reminder card notification with the call notification, and may display the notification icon corresponding to the flight reminder card notification. When the user slides upward from the bottom of the screen, in response to this operation performed by the user, the electronic device collapses the call notification into the notification icon. For example, the notification icon corresponding to the call notification may be stacked on the notification icon corresponding to the flight reminder card notification for display, or the notification icon corresponding to the call notification and the notification icon corresponding to the flight reminder card notification are expanded for display.

In an example of this application, when the user taps notification icons stacked for display, as shown in (b) in FIG. 17, a plurality of notification icons are directly expanded. If the user does not operate any one of the plurality of notification icons within specific duration (for example, 5s) after the plurality of notification icons are expanded, the electronic device re-collapses the plurality of notification icons into a stacked state, that is, resumes display in (a) in FIG. 17. When the user taps a specific notification icon in the plurality of expanded notification icons, the electronic device may display, in full screen, an in-progress notification corresponding to a notification icon tapped by the user; display, in a selected state, the notification icon tapped by the user; and display another notification icon in an unselected state. For example, as shown in (c) in FIG. 17, when the user taps the notification icon of the call notification, the electronic device displays the call notification in full screen in response to the tap operation performed by the user on the notification icon of the call notification. Then, if the user slides upward from the bottom of the screen, the electronic device collapses the call notification into the notification icon in response to the operation that the user slides upward from the bottom of the screen. In this case, the notification icon of the call notification is displayed in an unselected state. In other words, the electronic device resumes display of the interface shown in (b) in FIG. 17.

In an example, as shown in (d) in FIG. 17, if the user taps another notification icon in an unselected state in an interface shown in (c) in FIG. 17, the electronic device displays an in-progress notification corresponding to the notification icon tapped by the user. For example, if the user taps the notification icon of the countdown notification, as shown in (d) in FIG. 17, in response to the tap operation performed by the user on the notification icon of the countdown notification, the electronic device displays the countdown notification in full screen. In addition, the notification icon corresponding to the countdown notification after switching is displayed in a selected state, and another notification icon is displayed in an unselected state. In this way, an expanded notification icon is displayed, so that the user can tap the notification icon, to trigger the electronic device to switch to display different notifications, thereby improving user experience.

In another example, when the electronic device displays the interface shown in (c) in FIG. 17, the user can further slide leftward/rightward, to trigger the electronic device to switch to display the in-progress notification. For example, if the user slides leftward the interface shown in (c) in FIG. 17, in response to the leftward slide operation performed the user, the electronic device switches to display a next notification. To be specific, the electronic device switches to display the notification icon of the countdown notification, as shown in (d) in FIG. 17. In this way, the user can slide leftward/rightward, to trigger the electronic device to switch to display different notifications, thereby improving user experience.

In an example of this application, when the interface shown in (c) in FIG. 17 is displayed, if the user does not perform an operation within specific duration (for example, 5s), the electronic device may collapse the in-progress notification into the notification icon, and stack the notification icon for display. A display effect is consistent with a display effect shown in (a) in FIG. 17.

In an example of this application, when there are a plurality of notification icons, a display sequence of the notification icons may be sequentially displaying the notification icons from early to late based on push times and from the right to the left (or from the left to the right). That is, a notification icon of a latest in-progress notification is displayed on the leftmost.

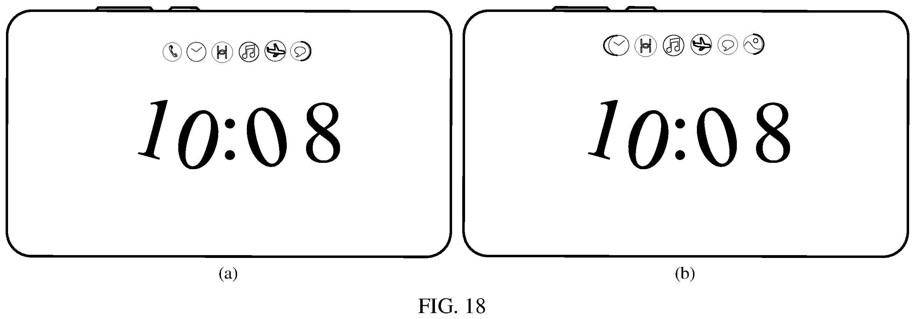

In an example of this application, when a quantity of notification icons exceeds a specific value threshold, a plurality of notification icons may be partially expanded for display and partially stacked for display. A preset quantity may be set according to a requirement. For example, the preset quantity may be 6. For example, as shown in (a) in FIG. 18, when there are more than six to-be-displayed notifications, six notification icons may be expanded for display, and another notification icon is stacked for display on a right side by default. In an example, the electronic device supports the user to slide the notification icon leftward/rightward. For example, as shown in (b) in FIG. 18, when the user slides leftward by a moving distance of one notification icon, in response to the operation that the user slides leftward by one notification icon, the electronic device may stack a 2nd notification icon from a left side in (a) in FIG. 18 on a 1st notification icon for display, that is, perform stacked display on the left side. In addition, another notification icon moves in sequence. The top one in notification icons stacked for display on the right side is displayed on the 5th, and a next notification icon in the notification icons stacked for display on the right side is displayed on the uppermost of the stacked notification icons on the right side. In this manner, the user may continue to slide the notification icon leftward, the stacked notification icons on the right side may be gradually expanded, and notification icons stacked on the left side gradually increase. For notification icons expanded for display, the user may tap the notification icons expanded for display, to trigger the electronic device to display corresponding in-progress notification. If the user continues to slide after sliding to the leftmost/rightmost, the electronic device displays an overscroll effect.

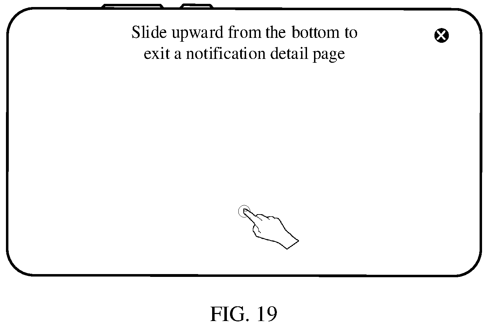

In an example of this application, as shown in FIG. 19, when the user taps an expanded notification icon for a first time, in response to the tap operation performed by the user, the electronic device displays an in-progress notification corresponding to the notification icon tapped by the user, and may display beginner operation guide information on the displayed in-progress notification, to guide the user to trigger the electronic device to collapse the in-progress notification. For example, as shown in FIG. 19, the electronic device may add a layer to an interface, and display prompt information "Slide upward from the bottom to exit a notification detail page" to the added layer; and may further display an operation guide gesture, which has an animation effect play effect. In an example, the beginner operation guide information may only appear one time, and animation effect play is completed. After actively completing a corresponding slide operation or tapping a "×" control in an upper right corner, the user may trigger the electronic device to no longer display the beginner operation guide information. In this way, the user may be guided to trigger, based on the beginner operation guide information, the electronic device to collapse the in-progress notification.

It should be noted that, embodiments of this application are described by using an example in which the electronic device may collapse the in-progress notification into a notification icon. In another example, the non-in-progress notification may also be collapsed into a notification icon. For example, when the user slides upward from the bottom of the screen or when the user selects the non-in-progress notification and slides upward, the electronic device may collapse the non-in-progress notification into a notification icon. The non-in-progress notification icon and the in-progress notification icon may be stacked together for display.

It can be learned that, in the standby mode, when the electronic device is relatively far away from the user, a corresponding notification may be displayed in full screen when a new notification event exists, thereby improving recognition of the notification. In addition, an important in-progress notification may be collapsed into a notification icon. After the user taps, a detailed notification may be expanded, and fast switching between a plurality of notifications can be performed, to improve operation efficiency of the user, thereby improving user experience.

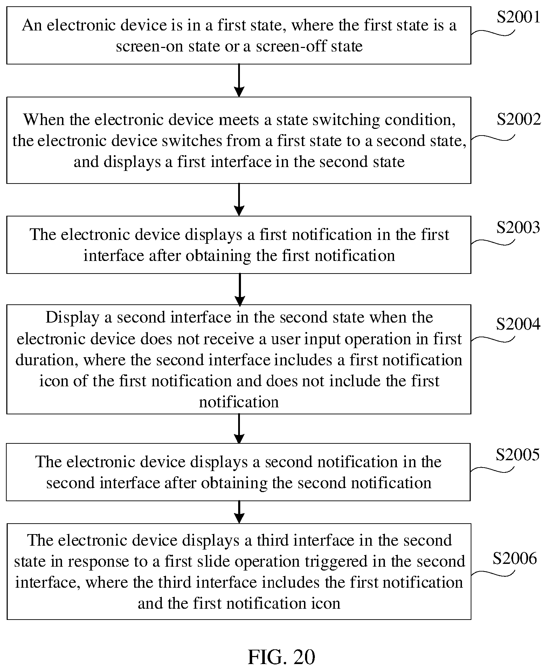

The following describes an implementation procedure of the notification display method provided in embodiments of this application in detail. FIG. 20 is a schematic flowchart of a notification display method according to an example embodiment. As an example rather than a limitation, the method is applied to an electronic device, and may mainly include some or all of the following content:
S2001: The electronic device is in a first state, where the first state is a screen-on state or a screen-off state.

The screen-on state includes displaying a home screen, a lock screen interface, or another interface in a use state. For example, the another interface in the use state includes a video play interface. The screen-off state includes displaying a screen-off interface or an AOD interface.

S2002: When the electronic device meets a state switching condition, the electronic device switches from a first state to a second state, and displays a first interface in the second state.

The electronic device is in a low power mode and performs landscape display in the second state. In this embodiment of this application, that the electronic device is in the second state means that the electronic device is in a standby mode.

The state switching condition includes that the electronic device is in a support state. When the electronic device includes only one display (that is, the electronic device is a bar-type machine), the support state means that the electronic device is in a landscape mode and duration is greater than or equal to fourth duration, and in the landscape mode, an included angle between a bottom edge of the electronic device and a horizontal plane is less than a third preset angle. When the electronic device includes two display units (that is, the electronic device is a foldable-screen device), the support state means that an included angle between the two display units of the electronic device is less than or equal to a first preset angle and is greater than or equal to a second preset angle, duration is greater than or equal to fourth duration, and the first preset angle is greater than the second preset angle; or the support state means that an included angle between the two display units of the electronic device is 0 degrees or 180 degrees and is in a landscape mode, and duration is greater than or equal to fourth duration.

The third preset angle may be set according to an actual requirement, and the third preset angle is usually a small angle.

The first preset angle and the second preset angle may be set according to a requirement. For example, the first preset angle is 145 degrees, and the second preset angle is 45 degrees; or the first preset angle is 85 degrees, and the second preset angle is 0 degrees; or the first preset angle is 85 degrees, and the second preset angle is 0 degrees. For the support state of the foldable-screen device, refer to (b) to (h) in FIG. 2.

The fourth duration may be set according to a requirement. For example, the fourth duration is 500 ms.

In an example, the state switching condition further includes: receiving a press operation performed by a user on a power key.

As an example rather than a limitation, a posture, a folding angle, and duration of the electronic device may be determined by obtaining sensor data collected by a sensor such as an acceleration sensor or a gyroscope sensor. This is not limited in this embodiment of this application.

The first interface may display card information in one of a plurality of theme display modes. For example, the first interface displays clock information in a clock and weather theme display mode; or the first interface displays a video picture in a video theme display mode; or the first interface displays a picture in an album theme display mode. For specific implementations, refer to the embodiment shown in FIG. 3A to FIG. 3E, FIG. 4A and FIG. 4B, or FIG. 8A to FIG. 8D.

S2003: The electronic device displays a first notification in the first interface after obtaining the first notification.

In an example of this application, the first notification is an in-progress notification.

In an example of this application, the electronic device may store an in-progress notification whitelist. The in-progress notification whitelist includes application information of an application to which the in-progress notification belongs, and the application information is used to uniquely indicate one application. For example, the application may include an application name and/or an application ID. In this way, when the first notification is obtained, a specific application that generates the first notification may be queried, and then whether the in-progress notification whitelist includes application information of an application to which the first notification belongs is queried. If the in-progress notification whitelist includes the application information of the application to which the first notification belongs, it may be determined that the first notification is an in-progress notification; otherwise, if the in-progress notification whitelist does not include the application information of the application to which the first notification belongs, it may be determined that the first notification is not an in-progress notification.

In this embodiment of this application, an example in which the first notification is an in-progress notification is used for description. For example, the application to which the first notification belongs is a call application, and the in-progress notification whitelist includes application information of the call application. The electronic device determines that the first notification is an in-progress notification, that is, the call notification is an in-progress notification.

It may be learned from FIG. 9A to FIG. 9D and FIG. 11A to FIG. 11C to FIG. 14 that a notification display manner varies with a type of a notification. For example, if an obtained notification is a non-in-progress notification, when the notification is to be displayed, a non-transparent layer is added to the first interface, and then the non-in-progress notification is displayed by using an icon. For details, refer to the embodiment shown in FIG. 9A to FIG. 9D. If an obtained notification is an in-progress notification, when the notification is to be displayed, a non-transparent layer is added to the first interface, and then the in-progress notification is displayed in a form of a page. For details, refer to FIG. 11A to FIG. 11C to FIG. 14. Because the first notification is an in-progress notification, the electronic device displays the first notification in full screen in a form of a page.

S2004: Display a second interface in the second state when the electronic device does not receive a user input operation in first duration, where the second interface includes a first notification icon of the first notification and does not include the first notification;
The first duration may be set according to a requirement. This is not limited in this embodiment of this application.

If the electronic device does not receive the user input operation in the first duration, it indicates that the user does not need to perform an operation on the first notification currently. In this case, the electronic device may collapse the first notification into the first notification icon.

It should be noted that other display content, in the second interface, different from the included first notification icon may be the same as display content of the first interface. For example, clock information shown in (a) in FIG. 14 is displayed. Alternatively, the other display content may be different from the display content of the first interface. For example, the second interface is shown in (b) in FIG. 15, and the first interface is shown in FIG. 8C.

It should be noted that, in this embodiment of this application, an example in which a collapsed display condition of the first notification is that the user input operation is not received in the first duration is used for description. In another example, the collapsed display condition of the first notification may be that a collapse operation is received. For example, as shown in (a) in FIG. 15, the collapse operation may be an operation that the user slides upward from the bottom of a screen.

S2005: The electronic device displays a second notification in the second interface after obtaining the second notification.

In an example, the second notification may be an in-progress notification. For example, the second notification is a call notification, a YoYo card notification, an alarm clock notification, or a countdown notification. In another example, the second notification may alternatively be a non-in-progress notification. For example, the second notification is a weather notification or an SMS message notification.

When the second notification is an in-progress notification, the second interface may further include a second notification icon of the second notification, the first notification icon and the second notification icon are expanded for display, the second notification icon is displayed in a selected state, and the first notification icon is displayed in an unselected state.

S2006: The electronic device displays a third interface in the second state in response to a first slide operation triggered in the second interface, where the third interface includes the first notification and the first notification icon.

In an example, the first slide operation is a leftward or rightward slide operation.

The electronic device displays the first notification in full screen in the third interface, and displays the first notification icon.

In an example of this application, when the second notification is an in-progress notification, the third interface further includes the second notification icon of the second notification, and the first notification icon and the second notification icon are expanded for display. In this case, the first notification icon is displayed in a selected state, and the second notification icon is displayed in an unselected state.

In this way, the user may slide leftward/rightward, to trigger the electronic device to switch to display a notification, thereby increasing a notification switching speed.

In an example of this application, when the second notification is an in-progress notification, after the electronic device displays the third interface in the second state in response to the first slide operation triggered in the second interface, in response to a user selection operation triggered on the second notification icon in the third interface, the electronic device switches the first notification in the third interface to the second notification, displays the first notification icon in an unselected state, and displays the second notification icon in a selected state. In this way, the user not only may slide leftward/rightward, to trigger the electronic device to perform notification switching, but also may trigger, by selecting a notification icon expanded for display, the electronic device to perform notification switching, both of which may increase a notification switching speed.

In an example of this application, when the second notification is an in-progress notification, after the electronic device displays the third interface in the second state in response to the first slide operation triggered in the second interface, the electronic device displays a fourth interface in the second state when a collapsed display condition of the second notification is met. The fourth interface includes the first notification icon and the second notification icon, and does not include the first notification or the second notification, and the first notification icon and the second notification icon are expanded for display.

For example, when displaying the second notification, after receiving an operation that the user slides upward from the bottom of the screen, the electronic device determines that the collapsed display condition of the second notification is met. In this case, the electronic device displays the fourth interface in the second state. In this case, the fourth interface expands the first notification icon and the second notification icon for display, and no longer displays the first notification or the second notification. For a display effect, refer to (b) in FIG. 17. Only notification icons of two in-progress notifications are included. In this way, occupation of display space by the notification may be reduced. In addition, because the notification icon is still displayed, the user may trigger, at any time, the electronic device to display a corresponding notification based on the displayed notification icon.

In an example of this application, after the electronic device displays the fourth interface in the second state, if no user trigger operation is received in second duration, the second notification icon is stacked on the first notification icon for display. The first notification icon and the second notification icon are expanded for display when a user trigger operation on the notification icons stacked for display is received.

The second duration may be set according to a requirement. This is not limited in this embodiment of this application.

If the user does not receive the user trigger operation in the second duration, it indicates that the user does not need to view a notification. In this case, the first notification icon and the second notification icon may be stacked for display, a notification icon of a notification whose push time is earlier is displayed under a notification icon of a notification whose push time is later, to reduce occupied space of an interface. Then, if the user taps the stacked notification icons, it indicates that the user may need to view a notification. Therefore, the electronic device expands the first notification icon and the second notification icon for display. For details, refer to (a) in FIG. 17 and (b) in FIG. 17.

In an example of this application, after the first notification icon and the second notification icon are expanded for display when the user trigger operation on the notification icons stacked for display is received, the electronic device receives a trigger operation on either of the notification icons that are expanded for display. In response to the trigger operation on the either of the notification icons, the electronic device displays a notification corresponding to the either of the notification icons in the second state, and displays the either of the notification icons is a selected state. For example, refer to (c) in FIG. 17. In this way, the user can view any in-progress notification at any time.

In an example of this application, after the second notification icon is stacked on the first notification icon for display if no user trigger operation is received in the second duration, the electronic device displays a fifth interface in the second state after obtaining a third notification. The fifth interface includes the first notification icon, the second notification icon, the third notification, and a third notification icon of the third notification, the third notification is an in-progress notification, and the first notification icon, the second notification icon, and the third notification icon are expanded for display.

That is, after notification icons are stacked for display, if a new in-progress notification is obtained, the electronic device may display the newly obtained in-progress notification in full screen in the second state. In addition, all notification icons may be expanded for display, so that the user can trigger, based on the notification icons expanded for display, the electronic device to quickly perform notification switching.

In an example, when the first notification icon and the second notification icon are stacked for display, if the received third notification is a non-in-progress notification, the electronic device may expand, for display, the first notification icon and the second notification icon that are stacked.

In an example of this application, when a quantity of notification icons in the second state exceeds a preset quantity, the preset quantity of notification icons are expanded for display, another notification icon different from the preset quantity of notification icons in the second state is stacked for display under the preset quantity of notification icons, and a push time of the notification icon stacked for display is earlier than a push time of the notification icon expanded for display. The preset quantity may be set according to a requirement, for example, may be set to 6. This is not limited in this embodiment of this application.

That is, when a plurality of notification icons are expanded for display, and the quantity of notification icons exceeds the preset quantity, the electronic device may stack a notification icon other than the preset quantity of notification icons in the notification icons for display on a first display side, and expand the preset quantity of notification icons for display on a second display side. The first display side and the second display side may be set according to a requirement. For example, the first display side may be a right side of an upper-end area of the screen in the landscape state, and the second display side may be a left side of the upper-end area of the screen in the landscape state. Specifically, for a stacked display effect, refer to the embodiment shown in (a) in FIG. 18. Alternatively, the first display side may be a lower side of a right-end area of the screen in the landscape state, and the second display side may be an upper side of the right-end area of the screen in the landscape state. In this way, display space occupied by the notification icon can be reduced, and a part of notification icons may be viewed by the user, to learn of a specific notification that may be viewed, thereby improving user experience.

In an example, the electronic device receives a second slide operation on the notification icon in the second state. A sliding direction of the second slide operation is a direction in which the notification icon stacked for display points to the notification icon expanded for display, and a sliding distance of the second slide operation corresponds to a moving distance of one notification icon. In response to the second slide operation, the electronic device stacks, on a 1st notification icon for display, a 2nd notification icon in the notification icons expanded for display, and sequentially moves, in the sliding direction by one place, another notification icon different from the 1st notification icon and the 2nd notification icon in the notification icons expanded for display. For details, refer to the embodiment shown in (b) in FIG. 18. In this way, the user may slide the notification icon, so that notification icons are partially expanded for display and partially stacked for display, so that the user may trigger, based on a notification icon expanded for display, the electronic device to display a corresponding notification. In addition, stacked display may reduce occupation of the display space.

In an example of this application, after the electronic device displays the second notification in the second interface after obtaining the second notification, the electronic device overlays a fourth notification on the second notification after obtaining the fourth notification; or the electronic device replaces the second notification in the second interface with a fourth notification after obtaining the fourth notification. In this way, the notification may be displayed in a plurality of manners, thereby increasing richness of notification display.

In an example of this application, the electronic device no longer displays the second notification or the second notification icon in the second state after execution of the notification event corresponding to the second notification ends, thereby saving display space.

In an example, when the second notification is a non-in-progress notification, the electronic device displays first notification information of the second notification in the second interface after obtaining the second notification. The first notification information is obtained by hiding notification text content of the second notification. For example, as shown in FIG. 9B, the first notification information includes a weather icon and new notification prompt information "1 notification". That is, weather notification text content is not displayed. In this way, security of notification display can be ensured, and security of user privacy can be improved.

In an example of this application, the electronic device displays second notification information of the second notification when the electronic device receives a view operation on the first notification information. The notification text content of the second notification is not hidden in the second notification information, for example, refer to FIG. 9C; or the electronic device displays the second interface if a display cancellation operation is received, or a user trigger operation on the second notification information in third duration is not received, for example, refer to a process from FIG. 9B to FIG. 9A.

In an example, after the electronic device displays second notification information of the second notification when the electronic device receives a view operation on the first notification information, the electronic device receives a view operation on the second notification information; and in response to the view operation on the second notification information, the electronic device displays an application detail page of an application to which the second notification belongs. In this way, the user can quickly view the application detail page when the electronic device is in the second state.

In an example, the electronic device displays an unlock interface when the view operation on the first notification information is received, and a lock screen password is set for the electronic device. The unlock interface is used to indicate a user to unlock. The electronic device displays the second notification information of the second notification in response to the view operation on the first notification information when unlocking succeeds. In this way, information viewing security can be improved, and user privacy can be successfully protected.

It should be noted that all the first interface, the second interface, the third interface, the fourth interface, and the fifth interface in this embodiment of this application may be referred to as standby interfaces, and display content thereof is different. For example, some include a notification icon, some include no notification icon, some include one notification icon, and some include a plurality of notification icons. In addition, other display content may be the same or different. For details, refer to the foregoing description of distinguishing between the first interface and the second interface.

In this embodiment of this application, the electronic device is in the first state. The first state is a screen-on state or a screen-off state. When the electronic device meets the state switching condition, the electronic device switches from the first state to the second state, and displays the first interface in the second state. The electronic device is in the low power mode and performs landscape display in the second state, and the state switching condition includes that the electronic device is in the support state. The electronic device displays the first notification in the first interface after obtaining the first notification, so that the user can clearly see the first notification in the first interface. The second interface in the second state is displayed when the electronic device does not receive the user input operation in the first duration. The second interface includes the first notification icon of the first notification and does not include the first notification. That is, the first notification is collapsed into the first notification icon. The electronic device displays the second notification in the second interface after obtaining the second notification, so that the user can clearly see the second notification in the second interface. The electronic device displays a third interface in the second state in response to a first slide operation triggered in the second interface. The third interface includes the first notification and the first notification icon. In this way, the user may trigger, by using the first slide operation, the electronic device to perform notification display switching, thereby increasing a notification switching speed, and improving properness of notification display.

The notification display method provided in embodiments of this application may be applied to an electronic device, or referred to as a computer device. For example, the electronic device may be a mobile phone, an action camera (GoPro), a digital camera, a tablet computer, a desktop computer, a laptop computer, a handheld computer, a notebook computer, an onboard device, an ultra-mobile personal computer (ultra-mobile personal computer, UMPC), a netbook, a cellular phone, a personal digital assistant (personal digital assistant, PDA), or an augmented reality (augmented reality, AR)\virtual reality (virtual reality, VR) device. This is not limited in the embodiments of this application.

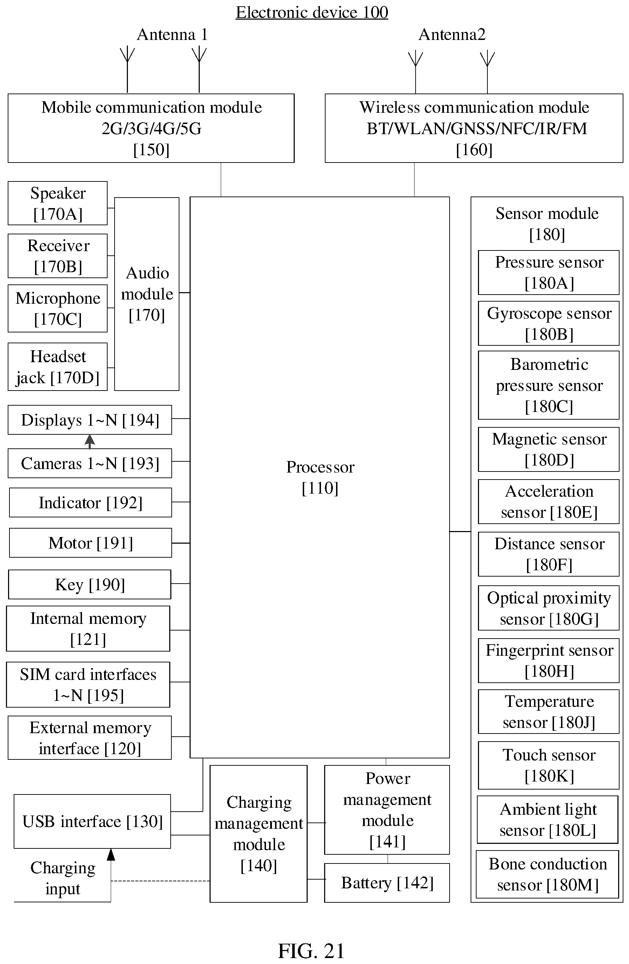

FIG. 21 is a schematic diagram of a structure of an electronic device according to an embodiment of this application. As shown in FIG. 21, an electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in the embodiment of this application constitutes no specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices or may be integrated into one or more processors.

The controller may be a nerve center and command center of the electronic device 100. The controller may generate an operation control signal based on an instruction operation code and a time sequence signal, to complete control of instruction fetching and instruction execution.

A memory may be further disposed in the processor 110 to store instructions and data. In some embodiments, the memory in the processor 110 is a cache. The memory may store instructions or data recently used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces, for example, may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identity module, SIM) interface, a universal serial bus (universal serial bus, USB) interface, and/or the like.

The charging management module 140 is configured to receive a charging input from a charger. When charging the battery 142, the charging management module 140 may further supply power to the electronic device 100 by using the power management module 141. The power management module 141 is configured to be connected to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like.

The electronic device 100 implements a display function by using the GPU, the display 194, the application processor, and the like. The GPU is a microprocessor for image processing, and is connected to the display 194 and the application processor. The GPU is configured to perform mathematical and geometric computing for graphics rendering. The processor 110 may include one or more GPUs, and the GPU executes a program instruction to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include 1 or N displays 194, where N is an integer greater than 1.

The electronic device 100 may implement the photographing function through the ISP, the camera 193, the video codec, the GPU, the display 194, the application processor, and the like.

The external memory interface 120 may be configured to connect to an external storage card such as a Micro SD card, to expand a storage capability of the electronic device 100. The external memory card communicates with the processor 110 by using the external memory interface 120, to implement a data storage function, for example, to store files such as music and a video in the external memory card.

The internal memory 121 may be configured to store computer-executable program code. The computer-executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a sound playing function or an image playing function), and the like. The data storage area may store data (such as audio data and a phone book) and the like created during use of the electronic device 100. In addition, the internal memory 121 may include a high-speed random access memory, and may further include a nonvolatile memory, for example, at least one magnetic disk storage device, a flash memory device, or a universal flash storage (universal flash storage, UFS).

The electronic device 100 may implement an audio function, for example, music playing and recording, by using the audio module 170, the speaker 170A, the receiver 170B, the microphone 170C, the headset jack 170D, the application processor, and the like.

The key 190 includes a power key, a volume key, or the like. The key 190 may be a mechanical key, or may be a touch key. The electronic device 100 may receive a key input and generate a key signal input related to user settings and function control of the electronic device 100.

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer instructions are loaded and executed on a computer, all or some of procedures or functions according to the embodiments of this application are produced. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line (Digital Subscriber Line, DSL)) or a wireless manner (for example, infrared, wireless, or microwave). The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital versatile disc (Digital Versatile Disc, DVD)), a semiconductor medium (for example, a solid state disk (Solid State Disk, SSD)), or the like.

The foregoing descriptions are merely optional embodiments provided in this application, but are not intended to limit this application. Any modification, equivalent replacement, and improvement made within the technical scope disclosed in this application shall fall within the protection scope of this application.

## Claims

1. A notification display method, applied to an electronic device, wherein the method comprises:
being, by the electronic device, in a first state, wherein the first state is a screen-on state or a screen-off state;
when the electronic device meets a state switching condition, switching, by the electronic device, from the first state to a second state, and displaying a first interface in the second state, wherein the electronic device is in a low power mode and performs landscape display in the second state, and the state switching condition comprises that the electronic device is in a support state;
displaying, by the electronic device, a first notification in the first interface after obtaining the first notification;
displaying a second interface in the second state when the electronic device does not receive a user input operation in first duration, wherein the second interface comprises a first notification icon of the first notification and does not comprise the first notification;
displaying, by the electronic device, a second notification in the second interface after obtaining the second notification; and
displaying, by the electronic device, a third interface in the second state in response to a first slide operation triggered in the second interface, wherein the third interface comprises the first notification and the first notification icon.

2. The method according to claim 1, wherein when the second notification is an in-progress notification, the third interface further comprises a second notification icon of the second notification, the first notification icon and the second notification icon are expanded for display, the first notification icon is in a selected state, and the second notification icon is in an unselected state; and
a notification event corresponding to the in-progress notification is a continuous event.

3. The method according to claim 2, wherein after the displaying, by the electronic device, a third interface in the second state in response to a first slide operation triggered in the second interface, the method further comprises:
in response to a user selection operation triggered on the second notification icon in the third interface, switching, by the electronic device, the first notification in the third interface to the second notification, displaying the first notification icon in an unselected state, and displaying the second notification icon in a selected state.

4. The method according to claim 2, wherein after the displaying, by the electronic device, a third interface in the second state in response to a first slide operation triggered in the second interface, the method further comprises:
displaying, by the electronic device, a fourth interface in the second state when a collapsed display condition of the second notification is met, wherein the fourth interface comprises the first notification icon and the second notification icon, and does not comprise the first notification or the second notification, and the first notification icon and the second notification icon are expanded for display.

5. The method according to claim 4, wherein after the displaying, by the electronic device, a fourth interface in the second state when a collapsed display condition of the second notification is met, the method further comprises:
stacking the second notification icon on the first notification icon for display if no user trigger operation is received in second duration; and
expanding the first notification icon and the second notification icon for display when a user trigger operation on the notification icons stacked for display is received.

6. The method according to claim 5, wherein after the expanding the first notification icon and the second notification icon for display when a user trigger operation on the notification icons stacked for display is received, the method further comprises:
receiving, by the electronic device, a trigger operation on either of the notification icons that are expanded for display; and
in response to the trigger operation on the either of the notification icons, displaying, by the electronic device, a notification corresponding to the either of the notification icons in the second state, and displaying the either of the notification icons is a selected state.

7. The method according to claim 5 or 6, wherein after the stacking the second notification icon on the first notification icon for display if no user trigger operation is received in second duration, the method further comprises:
displaying, by the electronic device, a fifth interface in the second state after obtaining a third notification, wherein the fifth interface comprises the first notification icon, the second notification icon, the third notification, and a third notification icon of the third notification, the third notification is an in-progress notification, and the first notification icon, the second notification icon, and the third notification icon are expanded for display.

8. The method according to any one of claims 2-7, wherein when a quantity of notification icons in the second state exceeds a preset quantity, the preset quantity of notification icons are expanded for display, another notification icon different from the preset quantity of notification icons in the second state is stacked for display under the preset quantity of notification icons, and a push time of the notification icon stacked for display is earlier than a push time of the notification icon expanded for display.

9. The method according to claim 8, wherein the method further comprises:
receiving, by the electronic device, a second slide operation on the notification icon in the second state, wherein a sliding direction of the second slide operation is a direction in which the notification icon stacked for display points to the notification icon expanded for display, and a sliding distance of the second slide operation corresponds to a moving distance of one notification icon; and
in response to the second slide operation, stacking, by the electronic device, on a 1st notification icon for display, a 2nd notification icon in the notification icons expanded for display, and sequentially moving, in the sliding direction by one place, another notification icon different from the 1st notification icon and the 2nd notification icon in the notification icons expanded for display.

10. The method according to claim 2, wherein after the displaying, by the electronic device, a second notification in the second interface after obtaining the second notification, the method further comprises:
overlaying, by the electronic device, a fourth notification on the second notification after obtaining the fourth notification; or
replacing, by the electronic device, the second notification in the second interface with a fourth notification after obtaining the fourth notification.

11. The method according to any one of claims 2-10, wherein the method further comprises:
no longer displaying, by the electronic device, the second notification or the second notification icon in the second state after execution of the notification event corresponding to the second notification ends.

12. The method according to any one of claims 2-11, wherein the displaying, by the electronic device, a second notification in the second interface after obtaining the second notification comprises:
after obtaining the second notification, determining, by the electronic device, first application information of an application to which the second notification belongs; and
displaying, by the electronic device, the second notification in full screen in the second interface when the first application information belongs to an in-progress notification whitelist, wherein the in-progress notification whitelist comprises application information of an application to which an in-progress notification belongs.

13. The method according to claim 1, wherein the second notification is a non-in-progress notification, and a notification event corresponding to the non-in-progress notification is a non-continuous event; and
the displaying, by the electronic device, the second notification in the second interface after obtaining the second notification comprises:
displaying, by the electronic device, first notification information of the second notification in the second interface after obtaining the second notification, wherein the first notification information is obtained by hiding notification text content of the second notification.

14. The method according to claim 13, wherein after the displaying, by the electronic device, a second notification in the second interface after obtaining the second notification, the method further comprises:
displaying, by the electronic device, second notification information of the second notification when the electronic device receives a view operation on the first notification information, wherein the notification text content of the second notification is not hidden in the second notification information; or
displaying, by the electronic device, the second interface if a display cancellation operation is received, or a user trigger operation on the second notification information in third duration is not received.

15. The method according to claim 14, wherein after the displaying, by the electronic device, second notification information of the second notification when the electronic device receives a view operation on the first notification information, the method further comprises:
receiving, by the electronic device, a view operation on the second notification information; and
in response to the view operation on the second notification information, displaying, by the electronic device, an application detail page of an application to which the second notification belongs.

16. The method according to claim 14 or 15, wherein the method further comprises:
displaying, by the electronic device, an unlock interface when the view operation on the first notification information is received, and a lock screen password is set for the electronic device, wherein the unlock interface is used to indicate a user to unlock; and
the displaying, by the electronic device, second notification information of the second notification when the electronic device receives a view operation on the first notification information comprises:
displaying, by the electronic device, the second notification information of the second notification in response to the view operation on the first notification information when unlocking succeeds.

17. The method according to any one of claims 1-14, wherein the displaying, by the electronic device, a first notification in the first interface after obtaining the first notification comprises:
adding, by the electronic device, a non-transparent layer to the first interface after obtaining the first notification; and
displaying, by the electronic device, the first notification at the non-transparent layer.

18. The method according to any one of claims 1-17, wherein when the electronic device comprises only one display unit, the support state means that the electronic device is in a landscape mode and duration is greater than fourth duration; and
when the electronic device comprises two display units, the support state means that an included angle between the two display units is less than or equal to a first preset angle and is greater than or equal to a second preset angle, duration is greater than the fourth duration, and the first preset angle is greater than the second preset angle.

19. An electronic device, wherein the electronic device comprises one or more processors and a memory; the memory is coupled to the one or more processors; the memory is configured to store computer program code; the computer program code comprises computer instructions; and the one or more processors invoke the computer instructions to enable the electronic device to perform the method according to any one of claims 1 to 18.

20. A chip system, wherein the chip system is applied to an electronic device, the chip system comprises one or more processors, and the one or more processors are configured to invoke computer instructions to enable the electronic device to perform the method according to any one of claims 1 to 18.

21. A computer-readable storage medium, wherein the computer-readable storage medium stores instructions, and when the instructions are run on a computer, the computer is enabled to perform the method according to any one of claims 1-18.
